# EUROPÄISCHE PATENTSCHRIFT

(11) **EP 2 259 868 B1**
(45) Veröffentlichungstag und Bekanntmachung des Hinweises auf die Patenterteilung: **26.02.2014**
(21) Anmeldenummer: 09719899.8
(22) Anmeldetag: 09.03.2009
(51) Int. Cl.: C09D 5/32, B01J 13/02, C09J 163/00

(54) **MIKROKAPSELN MIT STRAHLUNGSINDUZIERTER ODER THERMISCHER FREISETZUNG**
MICROCAPSULES HAVING A RADIATION-INDUCED OR THERMAL RELEASE
MICROCAPSULES AVEC LIBÉRATION THERMIQUE OU INDUITE PAR UN RAYONNEMENT

(30) Priorität: 11.03.2008 EP 08152583; 19.06.2008 EP 08158620
(43) Veröffentlichungstag der Anmeldung: 15.12.2010
(73) Patentinhaber: BASF SE, 67056 Ludwigshafen (DE)
(72) Erfinder: KOPLIN, Tobias Joachim, 67063 Ludwigshafen (DE); NORD, Simon, 76189 Karlsruhe (DE); LICHT, Ulrike, 68309 Mannheim (DE); BEYERS, Cornelis Petrus, 67122 Altrip (DE); SCHROEDER-GRIMONPONT, Tina, 76764 Rheinzabern (DE); SCHUMACHER, Karl-Heinz, 67433 Neustadt (DE)
(86) Internationale Anmeldenummer: PCT/EP2009/052696
(87) Internationale Veröffentlichungsnummer: WO 2009/112442

(56) Entgegenhaltungen:
- WO-A-2008/064999
- DE-A1- 10 062 641
- US-A- 4 191 404

## Beschreibung

Die vorliegende Erfindung betrifft Mikrokapseln umfassend eine Kapselwand auf Basis von Polymethacrylaten und einen Kapselkern, enthaltend eine lipophile Substanz, die strahlungsinduziert oder thermisch freigesetzt werden kann, ein Verfahren zu ihrer Herstellung sowie ihre Verwendung zur strahlungsinduzierten oder thermischen Freisetzung der lipophilen Substanz.

Mikrokapseln sind in den verschiedensten Ausführungsformen bekannt und werden je nach Dichtigkeit der Kapselwand zu sehr unterschiedlichen Zwecken verwendet. Beispielsweise dienen sie dem Schutz von Kernmaterialien, die erst durch gezielte mechanische Zerstörung der Kapselwand freigesetzt werden sollen, wie von Farbstoffen für Durchschreibepapiere oder von verkapselten Duftstoffen. In solchen Anwendungsbereichen kennt man Kapselwandmaterialien auf Gelatine-, Polyurethan-, und auf Polyharnstoffbasis sowie auf Basis von Polyacrylaten und -methacrylaten. Andere Anforderungen werden an Wandmaterialien für pflanzliche oder pharmazeutische Wirkstoffe als Kernmaterialien gestellt, bei denen es auf eine Durchlässigkeit der Kapselwand ankommt, die eine kontrollierte Freisetzung und den zielgerichteten Transport der Wirkstoffe ermöglicht.

Ein neueres Anwendungsgebiet für Mikrokapseln ist ihr Einsatz in Klebstoffformulierungen. Es hat dabei verschiedenste Ansätze gegeben, Klebstoffformulierungen zu verbessern oder Klebstoffe oder Komponenten gezielt zu verkapseln. Klebstoffe müssen in der Regel sowohl klebrig sein, wie auch eine Festigkeit zeigen. Eine Erwärmung auf höhere Temperaturen führt oftmals zu einem Erweichen der Klebstoffe und zum Nachlassen der Festigkeit. Es gibt jedoch Anwendungen, bei denen es wichtig ist, dass die Festigkeit auch bei höheren Temperaturen nicht nachlässt. Eine Lösung dieses Problems ist der Zusatz einer Vernetzerkomponente, die eine zusätzliche Festigkeit bewirkt.

Die US 5,596,051 beschreibt Mikrokapseln mit einem Poly-n-butylacrylat als Kernmaterial und einem Copolymer aus Methylmethacrylat und Methacrylsäureanhydrid als Wandmaterial. Die Wandöffnung erfolgt dabei durch Zusatz von Basen, die chemisch die Vernetzung lösen bzw. die Anhydridgruppen aufquellen lassen und so den Austritt des Klebharzes ermöglichen.

Die DE 3918141 lehrt Mikrokapseln mit Kapselwänden aus difunktionellen Säuren bzw. Säurederivaten und Hexamethylentetramin oder Acetaldehydammoniak-Derivaten als Vernetzern. Das eingebaute Hexamethylentetramin bzw. das Acetaldehydammoniak-Derivat ist dabei thermolabil und stellt somit eine Sollbruchstelle in der Kapselwand dar, die thermisch induziert die Freisetzung der Wirksubstanz bewirkt.

Die WO 91/12883 und WO 91/12884 lehren photo- bzw. thermolabile Mikrokapseln mit Kapselwänden aus Polyharnstoff. Im Wandpolymer sind Azo- oder Peroxidgruppen als Sollbruchstellen enthalten, die photochemisch oder thermisch ausgelöst, zur Öffnung der Kapselwand führen. Der Einbau derartiger Sollbruchstellen erfordert spezielle Monomere, die keine beliebige Verfahrensführung, vor allem nicht bei höheren Temperaturen, erlauben.

Die WO 02/20683 lehrt einen mikroverkapselten Acrylat-Klebstoff, wobei der Klebstoff erst während der Verkapselung gebildet wird. Als Wandmaterialien werden unter anderen Polyharnstoffharze und Alkylacrylat/Acrylsäure-Copolymere genannt. Die Freisetzung erfolgt durch Druck oder Wärme. Je nach Anwendung kann es jedoch nachteilig sein, dass die zu verklebenden Teile als Ganzes erwärmt werden müssen.

So sind aus den älteren europäischen Anmeldungen 06126997.3 und 06126994.0 thermisch zerstörbare Mikrokapseln für eine Kaschierklebstoffdispersion bekannt. Die darin beschriebenen Mikrokapselwände auf Basis von Polymethylmethacrylat werden in der Regel bei Temperaturen oberhalb 60 °C für die im Kern enthaltenen Carbodiimide durchlässig und bewirken so die Nachvernetzung der Kaschierklebstoffe.

Eine Aufgabe der vorliegenden Erfindung war es, ein weiteres Klebstoffsystem zur Verfügung zu stellen, bei dem thermisch gesteuert die Vernetzerkomponente gezielt freigesetzt werden kann.

Die WO 03/054102 beschreibt Klebstoffe, die wenigstens ein Metallmischoxid in Form superparamagnetischer, nanoskaliger Teilchen enthalten, sowie Verfahren zum Erwärmen solcher Zubereitungen mit dem Zweck, Klebeverbindungen auf Basis dieser Zubereitungen herzustellen oder zu lösen. So kann gemäß einer Ausführungsvariante die die Härtung auslösende Komponente, wie ein Monomer oder Katalysator, in Form von Mikrokapseln, die superparamagnetische, nanoskalige Teilchen als Kapselkern enthalten, in einer Klebstoffzusammensetzung dispergiert und durch Bestrahlung freigesetzt werden.

Die WO 02/48278 lehrt eine 1 K-Darreichungsform eines Zwei-Komponentenklebstoffs, bei dem die eine Komponente A mikroverkapselt vorliegt und die Mikrokapseln in einer Matrix der zweiten Komponente B verteilt sind. Durch Bestrahlung mit Licht der Wellenlänge 200-700 nm wird die Komponente A freigesetzt und der Klebstoff gebildet.

Die WO 2004/076578 lehrt Heißschmelzklebstoffe enthaltend im nahen Infrarotbereich absorbierende Farbstoffe oder Pigmente. Die Klebrigkeit kann durch Bestrahlung im nahen Infrarotbereich reaktiviert werden, indem an den bestrahlten Stellen so lange Energie eingetragen wird, bis der Schmelzklebstoff geschmolzen ist.

Eine besondere Problematik findet man bei Klebstoffen, wie man sie von Etikettenklebern kennt, da diese permanent klebrig sind. Wenn man sie verarbeitet, benötigt man zum Schutz der Klebefläche speziell beschichtete Papiere, die erst, wenn die Klebewirkung erwünscht wird, abgezogen werden. Die Schutzpapiere fallen dabei als Abfall an.

Eine weitere Aufgabe der vorliegenden Erfindung waren neue Klebstoffsysteme, die es ermöglichen, die Klebewirkung sowohl zeitlich wie auch räumlich gezielt zu steuern. Insbesondere sollten flüssige Klebstoffe oder flüssige Vorprodukte von Klebstoffen blockfest, das heißt, klebfrei gemacht werden und ihre Klebrigkeit erst zu einem vom Nutzer beliebig gewählten Zeitpunkt und nur an den vom Nutzer gewünschten Stellen wieder erhalten.

Ferner war es die Aufgabe der vorliegenden Erfindung neue Mikrokapseln zur Verfügung zu stellen, bei denen es möglich ist, die Freisetzung der Inhaltsstoffe gezielt räumlich und zeitlich zu steuern. Derartige Kapseln sollten über dichte Kapselwände verfügen sowohl in wässriger Dispersion wie auch in getrockneter Form beispielsweise als Film oder Pulver. Die zur Freisetzung benötigte Leistungsdichte sollte so gering wie möglich sein und mit einfach zu handhabenden Strahlungsquellen wie Mikrowellengeräten und IR-Strahlern bereitgestellt werden.

Demgemäß wurden Mikrokapseln gefunden, deren Kapselwand den Kapselkerninhalt durch Bestrahlung mit elektromagnetischer Strahlung ausgewählt aus dem Wellenlängenbereich von 700 nm bis 1 m freisetzen.

Weiterhin wurden Mikrokapseln gefunden, deren Kapselwand den Kapselkerninhalt durch thermische Erwärmung freisetzen.

Die vorliegende Erfindung betrifft Mikrokapseln, umfassend einen Kapselkern, enthaltend mindestens eine lipophile Substanz sowie mindestens eine Verbindung, die elektromagnetische Strahlung aus dem Wellenlängenbereich von 700 nm bis 1 m absorbiert, und eine Kapselwand aufgebaut aus

| | |
|---|---|
| 40 bis 80 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 20 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere, wobei die mindestens eine lipophile Substanz gemäß Anspruch 1 ausgewählt wird, sowie ein Verfahren zu ihrer Herstellung. Weiterhin wurde gefunden, dass auf diese Weise verkapselte lipophile Substanzen strahlungsinduziert freigesetzt werden können. Ferner betrifft die Anmeldung, die Verwendung dieser Mikrokapseln für Klebstoffsysteme sowie ein Verfahren zur Verklebung von mindestens zwei Substraten.

Die erfindungsgemäßen Mikrokapseln umfassen einen Kapselkern und eine Kapselwand aus Polymer. Der Kapselkern besteht überwiegend, zu mehr als 90 Gew.-%, aus lipophiler Substanz. Der Kapselkern kann dabei abhängig von der Temperatur sowohl fest als auch flüssig sein. Bevorzugt ist der Kapselkern bei einer Temperatur von 20 °C und Normaldruck flüssig. Unter flüssig ist zu verstehen, dass das Kernmaterial eine Viskosität nach Brookfield von ≤ 5 Pa·s aufweist.

Die mittlere Teilchengröße der Kapseln (mittels Lichtstreuung) beträgt 0,5 bis 50 µm, bevorzugt 0,5 bis 30 µm. Das Gewichtsverhältnis von Kapselkern zu Kapselwand beträgt im Allgemeinen von 50:50 bis 95:5. Bevorzugt wird ein Kern/Wand-Verhältnis von 70:30 bis 93:7.

Abhängig vom Herstellungsverfahren und dem dabei gewählten Schutzkolloid kann dieses ebenfalls Bestandteil der Mikrokapseln sein. So können bis zu 10 Gew.-% bezogen auf das Gesamtgewicht der Mikrokapseln Schutzkolloid sein. Gemäß dieser Ausführungsform weisen die Mikrokapseln auf der Oberfläche des Polymers das Schutzkolloid auf.

Als Kernmaterial kommen für die Mikrokapseln in Wasser unlösliche bis im Wesentlichen unlösliche Stoffe in Betracht, im Folgenden als lipophile Substanzen bezeichnet. Unter im wesentlichen unlöslich in Wasser ist dabei eine Löslichkeit der lipophilen Substanz in Wasser von ≤ 5 g/l, bevorzugt ≤ 1 g/l bei 25°C zu verstehen. Der Kapselkern kann eine oder mehrere lipophile Substanzen umfassen. Sofern es sich bei der lipophilen Substanz um eine Mischung handelt, kann diese beispielsweise als Lösung vorliegen. Lipophile Substanzen mit der oben genannten Wasserlöslichkeit werden bevorzugt ausgewählt aus der Gruppe umfassend aliphatische und aromatische Kohlenwasserstoffverbindungen, gesättigte oder ungesättigte C₆-C₃₀-Fettsäuren, Fettalkohole, C₆-C₃₀-Fettamine, Fettsäureester, natürliche und synthetische Wachse, halogenierte Kohlenwasserstoffe, natürliche Öle, Weichmacher, Vernetzer für Zweikomponentenklebstoffe, Klebharze und klebrig machende Harze für Zweikomponentenklebstoffe, Riech- und Aromastoffe, Wirkstoffe, Farbstoffe und/oder Farbbildnern, deren Absorptionsmaximum bei einer Wellenlänge < 700 nm liegt, Katalysatoren und Inhibitoren.

Erfindungsgemäß werden genannt:
a) aliphatische Kohlenwasserstoffverbindungen wie gesättigte oder ungesättigte C₇-C₄₀-Kohlenwasserstoffe, die verzweigt oder bevorzugt linear sind, z.B. wie n-Heptan, n- Octan, n-Nonan, n-Decan, n-Undecan, n-Dodecan, n-Tetradecan, n-Pentadecan, n-Hexadecan, n-Heptadecan, n-Octadecan, n-Nonadecan, n-Eicosan, n-Heneicosan, n-Docosan, n-Tricosan, n-Tetracosan, n-Pentacosan, n-Hexacosan, n-Heptacosan, n-Octacosan und Weißöl sowie cyclische Kohlenwasserstoffe, z.B. Cyclohexan, Cyclooctan und Cyclodecan;
b) aromatische Kohlenwasserstoffverbindungen wie Benzol, Naphthalin, Biphenyl, o- oder m-Terphenyl, C₆-C₄₀-alkylsubstituierte aromatische Kohlenwasserstoffe wie Dodecylbenzol, Tetradecylbenzol, Hexadecylbenzol, Hexylnaphthalin oder Decylnaphthalin;
c) gesättigte oder ungesättigte C₆-C₃₀-Fettsäuren wie Laurin-, Stearin-, Öl- oder Behensäure, bevorzugt eutektische Gemische aus Decansäure mit z.B. Myristin-, Palmitin- oder Laurinsäure;
d) Fettalkohole wie Lauryl-, Stearyl-, Oleyl-, Myristyl-, Cetylalkohol, Gemische wie Kokosfettalkohol sowie die sogenannten Oxoalkohole, die man durch Hydroformylierung von α-Olefinen und weiteren Umsetzungen erhält;
e) C₆-C₃₀-Fettamine, wie Decylamin, Dodecylamin, Tetradecylamin oder Hexadecylamin;
f) Ester wie C₆-C₁₀-Alkylester von Fettsäuren wie Propylpalmitat, Methylstearat oder Methylpalmitat sowie bevorzugt ihre eutektischen Gemische oder Methylcinnamat;
g) natürliche und synthetische Wachse wie Montansäurewachse, Montanesterwachse, Carnaubawachs, Polyethylenwachs, oxidierte Wachse, Polyvinyletherwachs, Ethylenvinylacetatwachs oder Hartwachse nach Fischer-Tropsch-Verfahren;
h) halogenierte Kohlenwasserstoffe wie Chlorparaffin, Bromoctadecan, Brompentadecan, Bromnonadecan, Bromeicosan, Bromdocosan;
i) natürliche Öle wie Erdnussöl und Sojaöl,
k) Vernetzer für Zweikomponentenklebstoffe, gegebenenfalls als Lösung in den oben genannten lipophilen Substanzen der Gruppen a) bis j); wie Aziridine, Epoxide, Oxazoline, Isocyanate, Oxime, Carbodiimide oder andere reaktive, mehrfunktionelle Verbindungen wie Säuren, Alkohole, Alkoxylate und Amine,
l) Klebharze für Zweikomponentenklebstoffe, gegebenenfalls als Lösung in den oben genannten lipophilen Substanzen der Gruppen a) bis j), wie Epoxidharze, Epoxy-Acrylatharz, Polyolefinharze; Polyurethanprepolymere und Silikonharze, sowie klebrig machende Harze, gegebenenfalls als Lösung in den oben genannten lipophilen Substanzen der Gruppen a) bis j), wie natürliche und synthetische Harze beispielsweise Kohlenwasserstoffharze, modifizierte Kolophoniumharze, Pinen- und Terpenharze;
m) Riech- und Aromastoffe gegebenenfalls als Lösung in den oben genannten lipophilen Substanzen der Gruppen a) bis i), wie in der WO 01/49817, oder in "Flavors and Fragrances", Ullmann's Encyclopedia of Industrial Chemistry, Whiley-VCH, 2002 beschrieben, auf die ausdrücklich Bezug genommen wird;
n) Wirkstoffe wie Biozide, Wirkstoffe gegen Endo- und Ektoparasiten, Herbizide, Fungizide, Algizide, Wirkstoffe gegen tierische Schädlinge z.B. Insektizide, Akarizide, Nematizide, Moluskizide und Wirkstoffe gegen Milben, sowie Safeners, , gegebenenfalls als Lösung in den oben genannten lipophilen Substanzen der Gruppen a) bis i), wie in der WO 2006/092409 beschrieben.
o) außerdem Lösungen von Farbstoffe und/oder Farbbildnern, deren Absorptionsmaximum bei einer Wellenlänge < 700 nm liegt, in den oben genannten lipophilen Substanzen der Gruppen a) bis i);
p) Katalysatoren und Inhibitoren.

Erfindungsgemäß werden als lipophile Substanzen Klebharze für Zweikomponentenklebstoffe, klebrig machende Harze, Vernetzer für Zweikomponentenklebstoffe, Riech- und Aromastoffe, Wirkstoffe, Farbstoffe und/oder Farbbildnern, deren Absorptionsmaximum bei einer Wellenlänge < 700 nm liegt, jeweils gegebenenfalls als Lösung in den oben genannten lipophilen Substanzen der Gruppen a) bis i), eingesetzt.

Bevorzugt handelt es sich bei der lipophilen Substanz um einen Vernetzer für Zweikomponentenklebstoffe oder ein Klebharz für Zweikomponentenklebstoffe. Bevorzugte Klebharze sind beispielsweise Epoxidharze und Epoxyacrylatharze, die Ausgangsmaterialien für Reaktivklebstoffe sind.

Epoxidklebharze sind in dem Buch von C.A. May "Epoxy resins" 2. Auflage, Marcel Dekker, Inc sowie in "Epoxy Resins, Curing Agents, Compounds and Modifiers", 2. Auflage, Flick, E.W. 1993 beschrieben. Geeignete Epoxidharze sind Diepoxid- oder Polyepoxid-Harze insbesondere solche mit einem mittleren Molekulargewicht ≤5000 g/mol. Sie sind z.B. unter dem Namen Araldite^{®} von Huntsman International LLC erhältlich. Ebenfalls bevorzugt sind Epoxidacrylatharze, bevorzugt mit einem mittleren Molekulargewicht ≤25000, wie nachfolgend im Rahmen der verkapselten Epoxidklebharze näher ausgeführt. Bevorzugt werden Harze auf Basis von Glycidylacrylaten und -methacrylaten. Bevorzugte Ausgangsmonomere für diese Harze sind Glycidylacrylat und/oder Glycidylmethacrylat, Acrylester, Styrol sowie Hydroxyalkylacrylate. Solche Produkte sind unter dem Namen Joncryl^{®} ADR von der BASF SE erhältlich.

Als Vernetzer k) geeignete Carbodiimide enthalten im Allgemeinen im Mittel 1 bis 20, vorzugsweise 1 bis 15, besonders bevorzugt 2 bis 10 Carbodiimidgruppen. Das zahlenmittlere Molgewicht Mₙ der Carbodiimid-Verbindungen beträgt vorzugsweise 100 bis 10000 besonders bevorzugt 200 bis 5000 und ganz besonders 500 bis 2000 g/mol. Das zahlenmittlere Molekulargewicht wird bestimmt durch Endgruppenanalyse der Diisocyanate (d.h. Verbrauch der Isocyanatgruppen durch Carbodiimidbildung, s. unten) oder falls die Endgruppenanalyse nicht möglich ist, durch Gelpermeationschromatographie (Polystyrolstandard, THF als Elutionsmittel).

Carbodiimidgruppen sind in einfacher Weise aus zwei Isocyanatgruppen unter Abspaltung von Kohlendioxid erhältlich:

-R-N=C=O + O=C=N-R

-R-N=C=N-R- + CO₂

Ausgehend von Polyisocyanaten, bzw. Diisocyanaten sind so Carbodiimide mit mehreren Carbodiimidgruppen und gegebenenfalls Isocyanatgruppen, insbesondere endständigen Isocyanatgruppen, erhältlich. Als Vernetzer geeignete Carbodiimide sind beispielsweise in der DE 10 2004 063 380 beschrieben auf die ausdrücklich Bezug genommen wird.

Als Vernetzer k) sind Diisocyanate geeignet, wie Diisocyanate der allgemeinen Formel X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht.

Als Vernetzer k) werden di- und polyfunktionelle Amine mit primären, sekundären oder tertiären Aminogruppen bevorzugt, die eine Wasserlöslichkeit < 5 g/l bei einer Temperatur von 50 °C haben, bevorzugt.

Als Vernetzer k) bevorzugt sind auch Di- und Polyepoxide.

Bedingt durch die Affinität des Absorbers zum Kernmaterial, ist der Absorber überwiegend mit dem Kernmaterial vermischt und/oder in die Kapselwand eingebaut.

Man unterscheidet dabei zwischen organischen und anorganischen Absorbern, die je nach den absorbierten Wellenlängen noch einmal in Absorber für IR und Mikrowelle unterteilt werden:
- Organische IR-Absorber
- Organische Mikrowellen-Absorber
- Anorganische IR-Absorber
- Anorganische Mikrowellen-Absorber

Gemäß einer Ausführungsform werden Mikrokapseln bevorzugt, bei denen die Verbindung, die elektromagnetische Strahlung aus dem Wellenlängenbereich von 700 nm bis 1 m absorbiert, ein organischer Absorber ist.

Gemäß einer anderen Ausführungsform werden Mikrokapseln bevorzugt, bei denen die Verbindung, die elektromagnetische Strahlung aus dem Wellenlängenbereich von 700 nm bis 1 m absorbiert, ein anorganischer Absorber ist.

Unter IR-Absorber ist im Rahmen dieser Anmeldung eine Verbindung zu verstehen, die aufgebracht in einer Schichtdicke von 50 µm bei mindestens einer Wellenlänge von Strahlung des Wellenlängenbereichs von 700 nm bis 1 mm eine Absorption ≥90 % zeigt. Bevorzugt ist der Wellenlängenbereich von >700 nm bis 2000 nm, sowie die Wellenlängen 9,6 µm und 10,6 µm.

Unter Mikrowellen-Absorber ist im Rahmen dieser Anmeldung eine Verbindung zu verstehen, die Mikrowellen des Wellenlängenbereichs von > 1 mm bis 1 m absorbiert. Besonders bevorzugt werden die technisch relevanten Frequenzen von 2,45 GHz, 433-444 MHz und 902-928 MHz.

Organisch IR-Absorber werden in der Literatur vielfältig beschrieben. Derartige Verbindungen umfassen Cyanine, Metallkomplexe, Quinone, Azofarbstoffe, Multiphenylmethan, Perylene, Quaterrylene, aromatische Annulene und insbesondere Metallphthalocyanine, Metallnaphthalocyanine, Metallporphyrine, Terrylimide und Quaterrylimide. Verbindungen mit derartigen Grundgerüsten sind dabei abhängig von den Substituenten in Lösungsmitteln löslich, also Farbstoffe, oder unlöslich und somit Pigmente. Beispielhaft seien IR-Absorber erwähnt, wie in der WO 02076988 beschrieben. Besonders bevorzugt werden Lumogen^{®} IR 765 und 788 der BASF Aktiengesellschaft.

Organische Mikrowellenabsorber sind beispielsweise in der älteren europäischen Anmeldung 07 106 445.5 beschrieben.

Anorganische Mikrowellenabsorber sind Metalloxide, die über ein magnetisches Moment verfügen, sowie Russ und Graphit. In der Regel absorbieren die Verbindungen auch IR-Strahlung, so dass die Aufzählung für beide Anregungsformen gilt.

Geeignete anorganische Absorber sind Partikel einer mittleren Teilchengröße im Bereich von 0,1 bis 5 µm, die elektrisch leitend, magnetisch, ferrimagnetisch, ferromagnetisch, antiferromagnetisch oder superparamagnetisch sind. Das Anlegen eines zusätzlichen statischen Magnetfeldes führt zu einer besseren Absorption dieser Partikel (typische Feldstärken sind 10-60 mTesla). Beispielhaft erwähnt seien Metalle und Übergangsmetalle, wie Al, Fe, Zn, Ti oder Cu, deren Salze wie beispielsweise deren Oxide, wie ZnO, Eisenoxide, speziell Ferrite, und TiO₂, Carbonate oder Sulfide, Kohlenstoff wie Graphit, Ruß, nanopartikulärer Kohlenstoff oder Nanotubes, Siliciumcarbide, Silicium, Alkali- und Erdalkalimetallsalze etc. Ferner sind die in der WO 03/054102 genannten Metallmischoxide geeignet.

Bevorzugt werden Ruß, Fe₃O₄ und Graphit.

Gemäß einer Ausführungsform werden Mikrokapseln mit einem Kapselkern enthaltend lipophile Substanz, besonders bevorzugt Klebharze für Zweikomponentenklebstoffe oder Vernetzer für Zweikomponentenklebstoffe, sowie mindestens einen organischen Absorber bevorzugt.

Gemäß einer weiteren Ausführungsform werden Mikrokapseln mit einem Kapselkern enthaltend lipophile Substanz, besonders bevorzugt Klebharze für Zweikomponentenklebstoffe oder Vernetzer für Zweikomponentenklebstoffe, sowie mindestens einen anorganischen Absorber bevorzugt.

Die Absorberteilchen sind, sofern sie anorganische Teilchen wie Ruß oder Fe₃O₄ sind, in der lipophilen Substanz des Kapselkerns dispergiert. Sofern die Absorberteilchen dispergiert vorliegen, sollten sie eine Teilchengröße ≤ 5 µm haben, vorzugsweise ≤ 2 µm.

Die erfindungsgemäßen Mikrokapseln enthalten, abhängig von der Art des Absorbers und der Aktivierungsform, maximal 10 Gew.-% Absorber, bevorzugt 0,01 bis 10 Gew.-%, insbesondere 0,1 bis 7 Gew.-%, ganz besonders bevorzugt 1 bis 5 Gew.-% Absorber, bezogen auf die Gesamtmenge an lipophiler Substanz und Monomere der Kapselwand.

Die Kapselwand ist im Wesentlichen aufgebaut aus

| | |
|---|---|
| 40 bis 80 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 20 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |
| jeweils bezogen auf das Gesamtgewicht der Monomere. | |
| Bevorzugt ist die Kapselwand ist im Wesentlichen aufgebaut aus | |
| 40 bis 80 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 20 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere, wobei die Monomere I 10 bis 90 Gew.-%, bezogen auf die Gesamtmenge der Monomere I, wenigstens ein Monomer Ia umfassen, dessen Homopolymerisat eine Glasübergangstemperatur (Tg) von ≤ 60°C, bevorzugt ≤ 20°C, besonders bevorzugt ≤ -20°C aufweist.

Die Polymere der Kapselwand enthalten im Allgemeinen mindestens 40 Gew.-%, in bevorzugter Form mindestens 50 Gew.-%, in besonders bevorzugter Form mindestens 60 Gew.-%, sowie bis zu 80 Gew.-% eines oder bevorzugt mehrere Monomere I aus ausgewählt unter C₁-C₂₄-Alkylester der Acryl- und/oder Methacrylsäure, Acrylsäure, Methacrylsäure und/oder Maleinsäure einpolymerisiert, bezogen auf das Gesamtgewicht der Monomere.

Diese Monomere I umfassen bevorzugt 10 bis 70 Gew.-%, insbesondere 15 bis 50 Gew.-%, bezogen auf die Gesamtmenge der Monomere I, wenigstens eines Monomers Ia.

Die Glasübergangstemperatur (Tg) eines Polmers ist definiert in der Encyclopedia of Chemical Technology, Volume 19, 4. Auflage, Seite 891, als die Temperatur unterhalb derer die Brownschen Molekularbewegungen längerer Kettensegmente (20-50 Kettenatome) der Polymere eingefroren sind. Ein Polymer zeigt unterhalb seiner Glasübergangstemperatur weder Fließverhalten noch Gummielastizität. Die Glasübergangstemperatur wird mittels DSC bestimmt gemäß DIN 53765: 1994-03.

Die Polymere der Kapselwand enthalten im Allgemeinen mindestens 20 Gew.-%, in bevorzugter Form mindestens 25 Gew.-%, in besonders bevorzugter Form mindestens 30 Gew.-%, sowie bis zu 60 Gew.-%, vorzugsweise bis zu 50 Gew.-% eines oder mehrerer bi- oder polyfunktioneller Monomere (Monomere II), welches in Wasser nicht löslich oder schwer löslich ist, einpolymerisiert, bezogen auf das Gesamtgewicht der Monomere.

Daneben können die Polymere bis zu 40 Gew.-%, vorzugsweise bis zu 30 Gew.-%, insbesondere bis zu 20 Gew.-% sonstige Monomere III einpolymerisiert enthalten. Besonders bevorzugt enthalten sie weniger als 5 Gew.-% sonstige Monomere III einpolymerisiert. Ganz besonders bevorzugt ist die Kapselwand nur aus den Monomeren I und II aufgebaut.

Als Monomere I eignen sich die C₁-C₂₄-Alkylester der Acryl- und/oder Methacrylsäure. Weiterhin eignen sich die ungesättigten C₃- und C₄-Carbonsäuren wie Acrylsäure, Methacrylsäure sowie Maleinsäure. Beispielhaft seien Methyl-, Ethyl-, n-Propyl-, iso-Propyl-, n-Butyl-, iso-Butyl-, sec.-Butyl- und tert.-Butylacrylat sowie Methyl-, Ethyl-, n-Propyl-, iso-Propyl-, n-Butyl-, iso-Butyl-, sec.-Butyl- und tert.-Butylmethacrylat genannt.

Die Monomere Ia sind eine Untergruppe der Monomere I. Geeignete Monomere Ia, deren Homopolymerisate eine Glasübergangstemperatur (Tg) von ≤60°C aufweist, sind beispielsweise die C₁-C₂₄-Alkylester der Acrylsäure und Butylmethacrylat. Beispielhaft seien Methylacrylat, Ethylacrylat, Propylacrylat, n-Butylacrylat, t-Butylacrylat, n-Pentylacrylat, 2-Methylbutylacrylat, 3-Methylbutylacrylat, Hexylacrylat, Ethylhexylacrylat und Propylheptylacrylat genannt. Bevorzugt wird n-Butylacrylat.

Geeignete Monomere II sind bi- oder polyfunktionelle Monomere, welche in Wasser nicht löslich oder schwer löslich sind, aber eine gute bis begrenzte Löslichkeit in der lipophilen Substanz haben. Unter Schwerlöslichkeit ist eine Löslichkeit kleiner 60 g/l bei 20°C zu verstehen. Unter bi- oder polyfunktionellen Monomeren versteht man Verbindungen, die wenigstens zwei nichtkonjugierte ethylenische Doppelbindungen haben. Vornehmlich kommen Divinyl- und Polyvinylmonomere in Betracht, die eine Vernetzung der Kapselwand während der Polymerisation bewirken.

Geignete Divinylmonomere sind Divinylbenzol und Divinylcyclohexan. Bevorzugte Divinylmonomere sind die Diester von Diolen mit Acrylsäure oder Methacrylsäure, ferner die Diallyl- und Divinylether dieser Diole. Beispielhaft seien Ethandioldiacrylat, Ethylenglykoldimethacrylat, 1,3-Butylenglykoldimethacrylat, Methallylmethacrylamid, Allylacrylat und Allylmethacrylat genannt. Besonders bevorzugt sind Propandiol-, Butandiol-, Pentandiol- und Hexandioldiacrylat und die entsprechenden Methacrylate.

Bevorzugte Polyvinylmonomere sind die Polyester von Polyolen mit Acrylsäure und/oder Methacrylsäure, ferner die Polyallyl- und Polyvinylether dieser Polyole sowie Trivinylbenzol und Trivinylcyclohexan. Bevorzugt werden Trimethylolpropantriacrylat und -methacrylat, Pentaerythrittriallylether, Pentaerythrittetraallylether, Pentaerythrittriacrylat und Pentaerythrittetraacrylat sowie ihre technischen Mischungen.

Als sonstige Monomere III kommen von den Monomeren I verschiedene monoethylenisch ungesättigte Monomere in Betracht. Bevorzugt sind Monomere IIIa wie Vinylacetat, Vinylpropionat und Vinylpyridin.

Besonders bevorzugt sind die wasserlöslichen Monomere IIIb, z.B. Acrylnitril, Methacrylamid, Hydroxyethylacrylat, Hydroxyethylmethacrylat, Itaconsäure, Maleinsäureanhydrid, N-Vinylpyrrolidon, 2-Hydroxyethylacrylat und -methacrylat und Acrylamido-2-methylpropansulfonsäure. Daneben sind insbesondere N-Methylolacrylamid, N-Methylolmethacrylamid, Dimethylaminoethylmethacrylat und Diethylaminoethylmethacrylat zu nennen.

Die erfindungsgemäßen Mikrokapseln lassen sich durch eine so genannte in-situ-Polymerisation herstellen. Das Prinzip der Mikrokapselbildung basiert darauf, dass man aus den Monomeren, einem Radikalstarter, einem Schutzkolloid und der einzukapselnden lipophilen Substanz eine stabile Öl-in-Wasser-Emulsion herstellt. Stabil bedeutet in diesem Fall, dass es über einen Zeitraum von 2 Stunden nicht zu einer Entmischung der Öl-in-Wasser-Emulsion kommt. Anschließend löst man die Polymerisation der Monomeren durch Erwärmung aus und steuert sie gegebenenfalls durch weitere Temperaturerhöhung, wobei die entstehenden Polymere die Kapselwand bilden, welche die lipophile Substanz umschließt. Dieses allgemeine Prinzip wird beispielsweise in der DE-A-1 0 139 171 beschrieben.

In der Regel werden die Mikrokapseln in Gegenwart wenigstens eines organischen oder anorganischen Schutzkolloids hergestellt. Sowohl organische wie auch anorganische Schutzkolloide können ionisch oder neutral sein kann. Schutzkolloide können dabei sowohl einzeln wie auch in Mischungen mehrerer gleich oder unterschiedlich geladener Schutzkolloide eingesetzt werden.

Organische Schutzkolloide sind bevorzugt wasserlösliche Polymere, die die Oberflächenspannung des Wassers von 73 mN/m maximal auf 45 bis 70 mN/m senken und somit die Ausbildung geschlossener Kapselwände gewährleisten sowie Mikrokapseln mit bevorzugten Teilchengrößen im Bereich von 0,5 bis 50 µm, vorzugsweise 0,5 bis 30 µm insbesondere 0,5 bis 10 µm, ausbilden.

Organische neutrale Schutzkolloide sind beispielsweise Cellulosederivate wie Hydroxyethylcellulose, Methylhydroxyethylcellulose, Methylcellulose und Carboxymethylcellulose, Polyvinylpyrrolidon, Copolymere des Vinylpyrrolidons, Gelatine, Gummiarabicum, Xanthan, Kasein, Polyethylenglykole, Polyvinylalkohol und partiell hydrolysierte Polyvinylacetate sowie Methylhydroxypropylcellulose. Bevorzugte organische neutrale Schutzkolloide sind Polyvinylalkohol und partiell hydrolysierte Polyvinylacetate sowie Methylhydroxypropylcellulose.

Im allgemeinen werden Polyvinylalkohol oder teilhydrolysiertes Polyvinylacetat in einer Gesamtmenge von 0,5-15 Gew.-%, bevorzugt 1-8 Gew.-% und besonders bevorzugt von 1,5-4 Gew.-% eingesetzt, bezogen auf die Mikrokapseln (ohne Schutzkolloid). Es ist jedoch auch möglich sie in einer Gesamtmenge von mindestens 3 Gew.-%, vorzugsweise von 6 bis 8 Gew.-% einzusetzten. Dabei ist es möglich, weitere oben genannte Schutzkolloide zusätzlich zu den bevorzugten Mengen Polyvinylalkohol oder teilhydrolysiertem Polyvinylacetat zuzusetzen. Bevorzugt werden die Mikrokapseln nur mit Polyvinylalkohol und/oder teilhydrolysiertem Polyvinylacetat und ohne Zusatz weiterer Schutzkolloide hergestellt. Ebenfalls bevorzugt sind Mischungen aus Polyvinylalkohol und/oder teilhydrolysiertem Polyvinylacetat mit Cellulosederivaten, insbesondere Methylhydroxypropylcellulose.

Polyvinylalkohol ist erhältlich durch Polymerisieren von Vinylacetat, gegebenenfalls in Gegenwart von Comonomeren, und Hydrolyse des Polyvinylacetats unter Abspaltung der Acetylgruppen unter Bildung von Hydroxylgruppen. Der Hydrolysegrad der Polymeren kann beispielsweise 1 bis 100 % betragen und liegt bevorzugt in dem Bereich von 50 bis 100 % insbesondere von 65 bis 95 %. Unter teilhydrolysierten Polyvinylacetaten ist im Rahmen dieser Anmeldung ein Hydrolysegrad von < 50% und unter Polyvinylalkohol von ≥ 50 bis 100 % zu verstehen. Die Herstellung von Homo- und Copolymerisaten von Vinylacetat sowie die Hydrolyse dieser Polymerisate unter Bildung von Vinylalkoholeinheiten enthaltenden Polymeren ist allgemein bekannt. Vinylalkoholeinheiten enthaltende Polymere werden beispielsweise als Mowiol^{®} Marken von Kuraray Specialities Europe (KSE) vertrieben.

Bevorzugt werden Polyvinylalkohole oder teilhydrolysierte Polyvinylacetate, deren-Viskosität einer 4 gew.-%igen wässrigen Lösung bei 20 °C nach DIN 53015 einen Wert im Bereich von 3 bis 56 mPa·s aufweist, bevorzugt einem Wert von 14 bis 45 mPa·s, insbesondere von 22 bis 41 mPa·s. Bevorzugt werden Polyvinylalkohole mit einem Hydrolysegrad von ≥ 65%, bevorzugt ≥ 70% insbesondere ≥ 75%.

Organische anionische Schutzkolloide sind Natriumalginat, Polymethacrylsäure und ihre Copolymerisate, die Copolymerisate des Sulfoethylacrylats und -methacrylats, Sulfopropylacrylats und -methacrylats, des N-(Sulfoethyl)-maleinimids, der 2-Acrylamido-2-alkylsulfonsäuren, Styrolsulfonsäure sowie der Vinylsulfonsäure. Bevorzugte organisch anionische Schutzkolloide sind Naphthalinsulfonsäure und Naphthalinsulfonsäure-Formaldehyd-Kondensate sowie vor allem Polyacrylsäuren und Phenolsulfonsäure-Formaldehyd-Kondensate.

Als anorganische Schutzkolloide, sind sogenannte Pickering-Systeme zu nennen, die eine Stabilisierung durch sehr feine feste Partikel ermöglichen und in Wasser unlöslich, aber dispergierbar sind oder unlöslich und nicht dispergierbar in Wasser, aber benetzbar von der lipophilen Substanz sind. Die Wirkweise und ihr Einsatz ist in der EP-A-1 029 018 sowie der EP-A-1 321 182 beschrieben, auf deren Inhalte ausdrücklich Bezug genommen wird.

Ein Pickering-System kann dabei aus den festen Teilchen allein oder zusätzlich aus Hilfsstoffen bestehen, die die Dispergierbarkeit der Partikel in Wasser oder die Benetzbarkeit der Partikel durch die lipophile Phase verbessern.

Die anorganischen festen Partikel können Metallsalze sein, wie Salze, Oxide und Hydroxide von Calcium, Magnesium, Eisen, Zink, Nickel, Titan, Aluminium, Silicium, Barium und Mangan. Zu nennen sind Magnesiumhydroxid, Magnesiumcarbonat, Magnesiumoxid, Calciumoxalat, Calciumcarbonat, Bariumcarbonat, Bariumsulfat, Titandioxid, Aluminiumoxid, Aluminiumhydroxid und Zinksulfid. Silikate, Bentonit, Hydroxyapatit und Hydrotalcite seien ebenfalls genannt. Besonders bevorzugt sind hochdisperse Kieselsäuren, Magnesiumpyrophosphat und Tricalciumphosphat.

Die Pickering-Systeme können sowohl zuerst in die Wasserphase gegeben werden, als auch zu der gerührten Emulsion von Öl-in-Wasser zugegeben werden. Manche feinen, festen Partikel werden durch eine Fällung hergestellt, wie in der EP-A-1 029 018, sowie der EP-A-1 321 182 beschrieben.

Die hochdispersen Kieselsäuren können als feine, feste Teilchen in Wasser dispergiert werden. Es ist aber auch möglich, sogenannte kolloidale Dispersionen von Kieselsäure in Wasser zu verwenden. Solch kolloidale Dispersionen sind alkalische, wässrige Mischungen von Kieselsäure. Im alkalischen pH-Bereich sind die Partikel gequollen und in Wasser stabil. Für eine Verwendung dieser Dispersionen als Pickering-System ist es vorteilhaft, wenn der pH-Wert der Öl-in-Wasser Emulsion mit einer Säure auf pH 2 bis 7 eingestellt wird.

Im allgemeinen werden die Schutzkolloide in Mengen von 0,1 bis 15 Gew.-%, vorzugsweise von 0,5 bis 10 Gew.-% eingesetzt, bezogen auf die Wasserphase. Für anorganische Schutzkolloide werden dabei bevorzugt Mengen von 0,5 bis 15 Gew.-%, bezogen auf die Wasserphase, gewählt. Organische Schutzkolloide werden bevorzugt in Mengen von 0,1 bis 10 Gew.-% eingesetzt, bezogen auf die Wasserphase der Emulsion.

Gemäß einer Ausführungsform werden anorganische Schutzkolloide sowie ihre Mischungen mit organischen Schutzkolloiden bevorzugt.

Gemäß einer weiteren Ausführungsform werden organisch neutrale Schutzkolloide bevorzugt.

Bevorzugt werden OH-Gruppen tragende Schutzkolloide wie Polyvinylalkohole und partiell hydrolysierte Polyvinylacetate.

Ferner ist es möglich zur Costabilisierung Tenside, bevorzugt nichtionische Tenside zuzusetzen. Geeignete Tenside sind dem "Handbook of Industrial Surfactants" zu entnehmen, auf dessen Inhalt ausdrücklich bezug genommen wird. Die Tenside können in einer Menge von 0,01 bis 10 Gew.-% bezogen auf die Wasserphase der Emulsion eingesetzt werden.

Als Radikalstarter für die radikalisch ablaufende Polymerisationsreaktion können die üblichen Peroxo- und Azoverbindungen, zweckmäßigerweise in Mengen von 0,2 bis 5 Gew.-%, bezogen auf das Gewicht der Monomere, eingesetzt werden.

Je nach Aggregatzustand des Radikalstarters und seinem Löslichkeitsverhalten kann er als solcher, bevorzugt jedoch als Lösung, Emulsion oder Suspension zugeführt werden, wodurch sich insbesondere kleine Stoffmengen Radikalstarter präziser dosieren lassen.

Als bevorzugte Radikalstarter sind tert.-Butylperoxoneodecanoat, tert.-Amylperoxypivalat, Dilauroylperoxid, tert.-Amylperoxy-2-ethylhexanoat, 2,2'-Azobis-(2,4-dimethyl)valeronitril, 2,2'-Azobis-(2-methylbutyronitril), Dibenzoylperoxid, tert.-Butylper-2-ethylhexanoat, Di-tert.-butylperoxid, tert.-Butylhydroperoxid, 2,5-Dimethyl-2,5-di-(tert.-butylperoxy)hexan und Cumolhydroperoxid zu nennen.

Besonders bevorzugte Radikalstarter sind Di-(3,5,5-trimethylhexanoyl)-peroxid, 4,4'-Azobisisobutyronitril, tert.-Butylperpivalat und Dimethyl-2,2-azobisisobutyrat. Diese weisen eine Halbwertzeit von 10 Stunden in einem Temperaturbereich von 30 bis 100°C auf.

Weiterhin ist es möglich zur Polymerisation dem Fachmann bekannte Regler in üblichen Mengen zuzusetzen wie tert-Dodecylmercaptan oder Ethylhexylthioglycolat.

Vorzugsweise wählt man die Dispergierbedingungen zur Herstellung der stabilen Ölin-Wasser Emulsion in an sich bekannter Weise so, dass die Öltröpfchen die Größe der gewünschten Mikrokapseln haben. Kleine Kapseln, insbesondere wenn die Größe unterhalb von 50 µm liegen soll, erfordern Homogenisier- oder Dispergiermaschinen, wobei diese Geräte mit oder ohne Zwangsdurchlaufvorrichtung versehen sein können.

Die Homogenisierung kann ferner durch die Anwendung von Ultraschall (z. B. Branson Sonifier 11450) erfolgen. Für die Homogenisierung mittels Ultraschall sind beispielsweise die in der GB 2250930 und US 5,108, 654 beschriebenen Vorrichtungen geeignet.

Die Kapselgröße kann über die Tourenzahl des Dispergiergerätes/ Homogenisiergerätes und/oder mit Hilfe der Konzentration des Schutzkolloids bzw. über dessen Molekulargewicht, d. h. über die Viskosität der wässrigen kontinuierlichen Phase innerhalbgewisser Grenzen gesteuert werden. Dabei nimmt mit Erhöhung der Tourenzahl bis zu einer Grenztourenzahl die Größe der dispergierten Teilchen ab.

Dabei ist es wichtig, dass die Dispergiergeräte zu Beginn der Kapselbildung angewendet werden. Bei kontinuierlich arbeitenden Geräten mit Zwangsdurchlauf ist es vorteilhaft, die Emulsion mehrmals durch das Scherfeld zu schicken.

Die Herstellung der Emulsion erfolgt in einem Temperaturbereich von 10 bis 130 °C, bevorzugt 30 bis 100 °C.

In der Regel führt man die Polymerisation bei 40 bis 150 °C, vorzugsweise bei 60 bis 120 °C durch. Natürlich sollte die Dispersions- und Polymerisationstemperatur oberhalb der Schmelztemperatur der lipophilen Substanzen liegen.

In der Regel führt man die Polymerisation bei 20 bis 100°C, vorzugsweise bei 40 bis 95°C durch. Abhängig von der gewünschten lipophilen Substanz ist die Öl-in-Wasser-Emulsion bei einer Temperatur zu bilden, bei der das Kernmaterial flüssig/ölig ist. Entsprechend muss ein Radikalstarter gewählt werden, dessen Zerfallstemperatur oberhalb dieser Temperatur und die Polymerisation ebenfalls 2 bis 50°C oberhalb dieser Temperatur durchgeführt werden, so dass man gegebenenfalls Radikalstarter wählt, deren Zerfallstemperatur oberhalb des Schmelzpunkts der lipophilen Substanz liegt. Eine gängige Verfahrensvariante für lipophile Substanzen mit einem Schmelzpunkt bis etwa 60°C ist eine Reaktionstemperatur beginnend bei 60°C, die im Verlauf der Reaktion auf 85°C erhöht wird. Vorteilhafte Radikalstarter haben eine 10-Stunden Halbwertszeit im Bereich von 45 bis 65°C wie t-Butylperpivalat.

Nach einer weiteren Verfahrensvariante für lipophile Substanzen mit einem Schmelzpunkt oberhalb 60°C wählt man ein Temperaturprogramm, welches bei entsprechend höheren Reaktionstemperaturen startet. Für Anfangstemperaturen um die 85°C werden Radikalstarter mit einer 10-Stunden Halbwertszeit im Bereich von 70 bis 90°C bevorzugt wie t-Butylper-2-ethylhexanoat.

Zweckmäßigerweise wird die Polymerisation bei Normaldruck vorgenommen, jedoch kann man auch bei vermindertem oder leicht erhöhtem Druck z. B. bei einer Polymerisationstemperatur oberhalb 100°C, arbeiten, also etwa im Bereich von 0,5 bis 5 bar.

Die Reaktionszeiten der Polymerisation betragen normalerweise 1 bis 10 Stunden, meistens 2 bis 5 Stunden.

Eine erfindungsgemäße Verfahrensvariante unter Einsatz von Polyvinylalkohol und/oder teilhydrolysiertem Polyvinylacetat ermöglicht eine vorteilhafte Verfahrensweise, gemäß der direkt bei erhöhter Temperatur dispergiert und polymerisiert wird.

Im Anschluss an die eigentliche Polymerisationsreaktion bei einem Umsatz von 90 bis 99 Gew.% ist es in der Regel vorteilhaft, die wässrigen Mikrokapseldispersionen weitgehend frei von Geruchsträgern, wie Restmonomere und anderen flüchtigen organischen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Ferner kann es chemisch geschehen, wie in der WO 99/24525 beschrieben, vorteilhaft durch redoxinitiierte Polymerisation, wie in der DE-A 44 35 423, DE-A 44 19 518 und DE-A 44 35 422 beschrieben.

Man kann auf diese Weise Mikrokapseln mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann. Bevorzugt werden Mikrokapseln mit einer mittleren Teilchengröße im Bereich von 0,5 bis 50 µm, bevorzugt 0,5 bis 30 µm (Z-Mittel mittels Lichtstreuung). Nach dem erfindungsgemäßen Verfahren können Mikrokapseldispersionen mit einem Gehalt von 5 bis 50 Gew.-% an Mikrokapseln hergestellt werden. Die Mikrokapseln sind Einzelkapseln.

Bei dem mittleren Teilchendurchmesser handelt es sich um den Gew.-mittleren Teilchendurchmesser, bestimmt durch quasielastische, dynamische Lichtstreuung. Besonders vorteilhaft ist die sehr enge Größenverteilung der Kapseln.

Die erfindungsgemäßen Mikrokapseln lassen sich vorzugsweise direkt als wässrige Dispersion verarbeiten. Eine Sprühtrocknung zu einem Mikrokapselnpulver ist generell möglich, wird jedoch in der Regel unter schonenden Bedingungen durchgeführt.

Die erfindungsgemäßen Mikrokapseln in der Ausführungsform mit verkapselten Riechund Aromastoffen eignen sich zur Ausrüstung von Verpackungen. Durch die Mikroverkapselung der Riech- oder Aromastoffe werden deren Verdampfungsraten deutlich herabgesetzt. Auf diese Weise ist es möglich diese dauerhaft auf an einem Ort, wie auf der Oberfläche eines Verpackungskarton zu fixieren und erst später gezielt durch einen Strahlungsimpuls freizusetzen. Eine mögliche Anwendung ist die Ausrüstung von Verpackungen, deren Inhalt in einer Mikrowelle erhitzt werden soll, mit Riech- oder Aromastoffe enthaltenden Mikrokapseln. Durch die Bestrahlung in der Mikrowelle werden die Riech- und/oder Aromastoffe gezielt freigesetzt.

Die erfindungsgemäßen Mikrokapseln eignen sich ferner zum Aufbau von blockfesten Beschichtungen auf Papier, Karton, Holz, etc., wobei aus diesen strahlungsinduziert der Kapselinhalt freigesetzt werden kann. Insbesondere eignen sie sich zur Herstellung von Beschichtungen enthaltend Verbindungen k) bis o), die unverkapselt einen Flüssigkeits- oder Ölfilm bilden würden. Weiterhin ist es möglich, in verkapselter Form Substanzen miteinander zu mischen, die anderenfalls direkt miteinander reagieren würden. Es ist dabei möglich sowohl eine als auch beide Reaktionskomponenten zu verkapseln. Durch die gezielt ausgelöste strahlungsinduzierte Öffnung ist dagegen die Reaktion steuerbar.

Die erfindungsgemäßen Mikrokapseln mit einer liphophilen Substanz der Gruppe k) oder I) eignen sich für Klebstoffsysteme wie Mehrkomponentenklebstoffe. Die erfindungsgemäßen Mikrokapseln mit Vernetzern k) als Kernmaterial haben ebenso die oben genannten Eigenschaften der Blockfestigkeit und steuerbaren Reaktivität und eignen sich insbesondere als Vernetzer für Polymersysteme, insbesondere für wässrige Polymere, vorzugsweise für Polymerdispersionen. Beispielhaft sei dies für Carbodiimide ausgeführt:

Die zu vernetzenden Polymere enthalten vorzugsweise Säuregruppen, besonders bevorzugt Carbonsäuregruppen. Diese Säuregruppen vernetzen mit den Carbodiimidgruppen. Die Mikrokapseln eignen sich z. B. als Vernetzer für wässrige Polyurethandispersionen oder wässrige Dispersionen von durch radikalische Polymerisation (vorzugsweise durch Emulsionspolymerisation) erhältlichen Polymeren, insbesondere auch deren Gemische.

Beispielhaft sei dies für Epoxid-haltige Vernetzer ausgeführt:
Die zu vernetzenden Polymere enthalten vorzugsweise funktionelle Gruppen, die über eine nukleophile Öffnung des Epoxides mit diesem reagieren können. Besonders bevorzugt sind primäre oder sekundäre Amingruppen, Hydroxylgruppen oder Säuregruppen, dabei besonders bevorzugt Carbonsäuregruppen. Die Mikrokapseln eignen sich z.B. als Vernetzer für wässrige Polyurethandispersionen oder wässrige Dispersionen von durch radikalische Polymerisation (vorzugsweise durch Emulsionspolymerisation) erhältlichen Polymeren, insbesondere auch deren Gemische.

Die Mikrokapseln eignen sich als Vernetzer in Klebstoffen, Anstrichen, Lacken, Papierstreichmassen oder sonstigen Beschichtungs- oder Imprägnierungsmitteln.

Besonders bevorzugt werden die Mikrokapseln als Vernetzer in Klebstoffen, besonders bevorzugt wässrigen Klebstoffen verwendet. Derartige Klebstoffe enthalten mindestens ein polymeres Bindemittel und gegebenenfalls Zusatzstoffe wie Füllstoffe, Verdicker, Entschäumer, Farbstoffe, Pigmente etc.

Bei dem polymeren Bindemittel handelt es sich vorzugsweise um ein Polyurethan, ein radikalisch polymerisiertes Polymer oder deren Gemische. Die polymeren Bindemittel liegen vorzugsweise in Form von wässrigen Dispersionen vor. Als Polyurethan oder radikalisch polymerisiertes Polymer kommen insbesondere die in WO 03/068703 und DE 10 2004 063 380 beschriebenen Polyurethandispersionen oder Emulsionspolymerisate in Betracht.

Die Applikation der Mikrokapseln erfolgt als Dispersion in einem hydrophilen Lösungsmittel, bevorzugt als wässrige Dispersion. Dieser können gegebenenfalls weitere Effektstoffe, wie z. B. Slipadditive, Haftvermittler, Verlaufmitteln, filmbildende Hilfsmittel, Flammschutzmittel; Korrosionsinhibitoren, Wachse, Sikkative, Mattierungsmitteln, Entlüftungsmittel, Verdickungsmittel und wasserlösliche Biozide zugesetzt werden.

Im Falle eines Zweikomponenten Klebstoffes enthält dieser das polymere Bindemittel und die Mikrokapseln. Das polymere Bindemittel liegt dazu vorzugsweise in Form einer wässrigen Dispersion vor. Geeignete polymere Bindemittel sind unten im Rahmen der Haftklebstoffe mit mikroverkapselten Epoxidklebharzen näher ausgeführt. Weitere Zusatzstoffe, auch die Mikrokapseln können in einfacher Weise zur wässrigen Dispersion des polymeren Bindemittels gegeben werden.

Der Gehalt an Mikrokapseln beträgt vorzugsweise 0,1 bis 40 Gew.-Teile, besonders bevorzugt 0,2 bis 20 Gew.-Teile Mikrokapsel, ganz besonders bevorzugt 0,5 bis 10 Gew.-Teile auf 100 Gew.-% Klebstoff (fest, ohne Wasser oder sonstige bei 21°C, 1 bar flüssige Bestandteile).

Bei dem zu vernetzenden Klebharzen handelt es sich vorzugsweise um einen Haftklebstoffe oder Kaschierklebstoffe. Kaschierklebstoffe, insbesondere ihre unterschiedlichen Anwendungen, sind dem Fachmann allgemein bekannt und werden beispielsweise in DE 10 330 749, DE 4308079 und DE 19 916 663 beschrieben.

Nach einer bevorzugten Ausführungsform ist es möglich der Mikrokapseldispersion weitere oben genannte IR- oder Mikrowellenabsorber zu zusetzen, um die Absorption zu vergrößern. Es kann sich dabei sowohl um den konkret bei der Verkapselung eingesetzten Absorber handeln als auch um einen davon verschiedenen. Diese Absorber liegen im Gegensatz zu den verkapselten Absorbern in der kontinuierlichen Phase frei dispergiert vor.

Gegenstand der vorliegenden Erfindung ist ferner ein Verfahren zur Freisetzung von lipophiler Substanz durch Bestrahlung der erfindungsgemäßen Mikrokapseln mit elektromagnetischer Strahlung ausgewählt aus dem Wellenlängenbereich von 700 nm bis 1 m. Je nach lipophiler Substanz lässt sich dieses Verfahren nutzen. Im Fall von Klebharzen l), klebrig machenden Harzen l) oder Vernetzern k) als lipophiler Substanz, können die erfindungsgemäßen Mikrokapseln in einem Klebeverfahren genutzt werden.

Gegenstand der vorliegenden Erfindung ist daher auch ein Verfahren zur Verklebung von mindestens zwei Substraten, bei dem auf die Oberfläche mindestens eines Substrates mindestens ein Vernetzer k) und ein Klebharz l) und/oder ein klebrigmachendes Harz l) aufgebracht werden, von denen mindestens eines als erfindungsgemäße Mikrokapseln vorliegt, und vor, während oder nach einem Zusammenfügen der Substrate mit Strahlung im Wellenlängenbereich der Absorption des Absorbers bestrahlt wird, wobei im Fall der Bestrahlung nach dem Zusammenfügen der Substrate mindestens eines der Substrate für die Strahlung zumindest teilweise durchlässig sein muss.

Zur Herstellung der Beschichtungen können die Mikrokapseldispersionen auf die zu beschichtenden Substrate aufgetragen werden, d.h. das Lösungsmittel wird anschlieβend nach geeigneten Verfahren entfernt. Es ist erfindungsgemäß möglich eine nichtklebrige Mikrokapseldispersion flächig oder punktuell aufzubringen und durch gezielte Bestrahlung einzelner Bereich den Klebstoff nur an diesem Stellen freizusetzen.

Zur Energieeintragung und damit Freisetzung der Klebstoffe eignen sich elektromagnetische Wechselfelder. Die können beispielsweise mit Lampen, die einen hohen Anteil an IR-Strahlung abgeben, Infrarotlasern, oder Mikrowellenerzeugern wie Klystrone oder Magnetrone erzeugt werden.

Als geeignete Laser seien beispielhaft aufgezählt:
- Gaslaser wie CO₂-Laser (Wellenlänge 9,6 µm bzw. 10,6 µm), Helium-Neon-Laser (HeNe-Laser, Wellenlänge 632,8 nm) und Krypton-Ionen-Laser, (647,1 nm stärkste Linie; 676,4 nm; 752,5 nm; 799,3 nm);
- Farbstofflaser
- Festkörperlaser wie Nd:YAG Laser (1064 nm), Nd:Glas Laser (1061 nm), Titan:Saphir-Laser (abstimmbar 670-1100 nm) und Faserlaser (Erbium, Ytterbium oder Neodym dotiert; 0,7 µm bis 3 µm) sowie
- Halbleiterlaser (700 nm bis 4 µm).

Die Wellenlängen der eingesetzten IR-Strahlung liegen vorzugsweise in einem Bereich >700 nm bis 2000 nm. Gut geeignet sind Wellenlängen 9,6 µm und 10,6 µm. Bevorzugt ist für die NIR/IR Bestrahlung eine Leitungsdichte von 1-100 W/cm² bevorzugt 1-40 W/cm², bei einer Bestrahlungszeit von 0,01-20 s.

Die Frequenz der eingesetzten Mikrowellenstrahlung liegt vorzugsweise in einem Bereich von 500 MHz bis 25 GHz. So lassen sich beispielsweise elektronmagnetische Strahlungen der sogenannten ISM-Bereiche (Industrial Scientific and Medical Application) einsetzen, bei denen die Frequenzen zwischen 100 MHz und 200 GHz liegen. Nähere Angaben zu elektromagnetischen Wechselfeldern im Mikrowellenbereich sind bei Kirk Othmer, "Encyclopedia of Chemical technology", 2. Auflage, Band 15, Kapitel "Micro-wave technology" beschrieben, worauf hier Bezug genommen wird.

Bevorzugte Schichtdicken sowohl für IR- wie auch die Mikrowellenbestrahlung sind z.B. 1 bis 500 µm, besonders bevorzugt 5 bis 300, ganz besonders bevorzugt 10 bis 100 µm. Dickere Schichten sind prinzipiell möglich, nehmen jedoch in der Regel in ihrer Tiefe an Strahlungsdurchlässigkeit ab.

Bevorzugte Kaschierfolien sind Polymerfolien, Metallfolien, Vliese aus synthetischen oder natürlichen Fasern, beschichtetes oder unbeschichtetes Papier oder auch Furniere aus Holz oder Holzimitat handeln. Diese Folien werden üblicherweise auf ein nichtflexibles Substrat wie einen Formkörper aufgebracht.

Bei dem Verklebungs-Verfahren kann aber insbesondere auch das flexible Substrat mit Klebstoff beschichtet werden. Die Beschichtung kann nach üblichen Auftragsverfahren erfolgen. Nach der Beschichtung erfolgt eine Trocknung bei Raumtemperatur oder Temperaturen bis zu 80 °C oder Temperaturen oberhalb 80°C und entsprechend kürzerer Zeit, um Wasser oder sonstige Lösemittel zu entfernen. Bevorzugt wird bei Raumtemperatur oder Temperaturen bis zu 80 °C getrocknet. Anschließend kann das beschichtete flexible Substrat aufkaschiert oder laminiert werden.

Die aufgebrachte Klebstoffmenge (auf dem flexiblen oder nicht-flexiblen Substrat) beträgt vorzugsweise 0,5 bis 500 g/m², bevorzugt 0,5 bis 300 g/m², besonders bevorzugt 2 bis 300 g/m², insbesondere 2 bis 200 g/m², vor allem 10 bis 250 g/m² und ganz besonders bevorzugt 10 bis 100 g/m².

Die aufgebrachte Klebstoffmenge kann in einem direkten oder indirekten Verfahren einseitig oder doppelseitig auf dem flexiblen oder nicht-flexiblen Substrat aufgebracht werden.

Das mit Klebstoff beschichtete Substrat kann nahezu beliebig lange, z. B. über mehrere Wochen und Monate, gelagert werden. Das beschichtete Substrat ist lagerstabil, d. h. auch nach mehreren Wochen Lagerzeit kann das beschichtete Substrat mit unverändert guten Ergebnissen verarbeitet werden.

Die die erfindungsgemäßen Mikrokapseln enthaltenden Klebstoffe ermöglichen sowohl eine vollflächige wie auch eine punktuelle Verklebung. Das bedeutet für Letzteres, dass die Strahlungsenergie zur Freisetzung aus den Kapseln punktuell, strukturiert und fokussiert eingebracht wird. Das ermöglicht im Vorfeld einen gleichmäßigen Auftrag von verkapselter Substanz, was im Allgemeinen leicht durchzuführen ist.

Zur Verklebung werden die zu verklebenden Teile punktuell bestrahlt und zusammengefügt, oder erst zusammengefügt und dann punktuell bestrahlt. Wobei die gleichen Voraussetzungen gelten, wie oben beschrieben.

Die Verklebung erfolgt vorzugsweise unter Druck, dazu können z. B. die zu verklebenden Teile mit einem Druck von 0,05 bis 50 N/mm² zusammengepresst werden.

Die erhaltenen Verbunde haben gute anwendungstechnische Eigenschaften, z.B. eine gute Haftung und hohe innere Festigkeit, auch bei langen Lagerzeiten der erfindungsgemäßen Mikrokapseldispersionen.

Die vorliegende Erfindung betrifft weiterhin Mikrokapseln, umfassend einen Kapselkern, enthaltend mindestens ein Epoxidklebharz und gegebenenfalls eine Verbindung, die die elektromagnetische Strahlung aus dem Wellenlängenbereich von 700 nm bis 1 m absorbiert, und eine Kapselwand aufgebaut aus

| | |
|---|---|
| 40 bis 90 Gew.-% | eines oder mehrerer Monomere (Monomere l) ausgewählt unter C₁-C₂₄-Alkylestern der Acryl- und/oder Methacrylsäure, Acrylsäure, Methacrylsäure und Maleinsäure, |
| 10 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |
| jeweils bezogen auf das Gesamtgewicht der Monomere, | |
| sowie ein Verfahren zu ihrer Herstellung, Klebstoffsysteme enthaltend diese Mikrokapseln sowie ein Klebeverfahren. | |
| Die vorliegende Erfindung betrifft weiterhin Mikrokapseln, umfassend einen Kapselkern, enthaltend mindestens ein Epoxidklebharz und eine Kapselwand aufgebaut aus | |
| 40 bis 90 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 10 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere,

mit der Maßgabe, dass der Kapselkern keine Verbindung, die elektromagnetische Strahlung aus dem Wellenlängenbereich von 700 nm bis 1 m absorbiert, enthält, sowie ein Verfahren zu ihrer Herstellung, Klebstoffsysteme enthaltend diese Mikrokapseln sowie ein Klebeverfahren.

Die erfindungsgemäß verkapselten Epoxidklebharze werden aufgrund ihres Molekulargewichtes als Harze bezeichnet. Ihre nachfolgend beschriebene Wirkweise entspricht jedoch eher der eines Vernetzers. Epoxidklebharze sind in dem Buch von C.A. May "Epoy resins" second edition, Marcel Dekker, Inc beschrieben. Geeignete Epoxidharze sind Diepoxid- oder Polyepoxid-Harze insbesondere solche mit einem gewichtsmittleren Molekulargewicht ≤25000 g/mol.

Solche di- oder polyfunktionellen Epoxidharze sowie Verfahren zu ihrer Herstellung sind dem Fachmann bekannt. Im Allgemeinen werden sie durch Umsetzung von Epichlorhydrin mit Verbindungen mit zwei oder mehreren endständigen reaktiven Wasserstoffen erhalten. Beispielhaft seien Epoxidklebharze genannt, die erhältlich sind durch Umsetzung von jeweils Epichlorhydrin mit Bisphenol A, mit Novolakharzen, mit Carbonsäuren oder mit aliphatischen Alkoholen. Letztere werden als Glydidylether bezeichnet. Als bevorzugte Epoxidharze seien Harze auf Basis von Bisphenol-A/Epichlorhydrin sowie Epoxidacrylatharze genannt.

Die aus Bisphenol-A und Epichlorhydrin aufgebauten Harze haben in der Regel mittlere Molekulargewichte im Bereich von 500 g/mol bis 1000 g/mol, bevorzugt 600 g/mol bis 800 g/mol und sind z.B. unter dem Namen Araldite^{®} von Huntsmann International LLC erhältlich.

Weiterhin werden als Epoxidklebharze Styrol/(Meth)acrylat-Copolymere mit Epoxidgruppen bevorzugt, die durch Polymerisation von (Meth)acrylaten, die einen oder mehrere Epoxidreste tragen, mit Styrolmonomeren und gegebenenfalls mit weiteren nichtfunktionalisierten (Meth)acrylatmonomeren erhalten werden. Weiterhin werden als Epoxidklebharze (Meth)acrylat-Copolymere mit Epoxidgruppen bevorzugt, die durch Polymerisation von (Meth)acrylaten, die einen oder mehrere Epoxidreste tragen, mit weiteren nichtfunktionalisierten (Meth)acrylatmonomeren erhalten werden. Der Begriff (Meth)acrylat umfasst dabei Acrylatmonomere sowie Methacrylatmonomere.

Erfindungsgemäß sind sowohl Methacrylatmonomere mit Epoxidresten sowie Acrylatmonomere mit Epoxidresten geeignet. Beispielhaft seien als Monomere mit 1,2-Epoxidresten Glycidylacrylat und Glycidylmethacrylate genannt. Weitere geeignete epoxyfunktionalisierte Monomere sind Allylglycidylether, Glycidylethacrylate und Glycidylitaconate.

Geeignete nichtfunktionalisierte Acrylatmonomere und Methacrylatmonomere für Epoxidklebharze umfassen Methylacrylat, Ethylacrylat, n-Propylacrylat, i-Propylacrylat, n-Butylacrylat, s-Butylacrylat, i-Butylacrylat, t-Butylacrylat, n-Amylacrylat, i-Amylacrylat, Isobornylacrylat, n-Hexylacrylat, 2-Ethylbutylacrylat, 2-Ethylhexylacrylat, n-Octylacrylat, n-Decylacrylat, Methylcyclohexylacrylat, Cyclopentylacrylat, Cyclohexylacrylat, Methylmethacrylat, Ethylmethacrylat, n-Propylmethacrylat, n-Butylmethacrylat, i-Propylmethacrylat, i-Butylmethacrylat, s-Butylmethacrylat, t-Butylmethacrylat, n-Amylmethacrylat, n-Hexylmethacrylat, i-Amylmethacrylat, Isobornylacrylat, n-Hexylacrylat, 2-Ethylbutylmethacrylat, Methylcyclohexylmethacrylat, Cinnamylmethacrylat, Crotylmethacrylat, Cyclohexylmethacrylat, Cyclopentylmethacrylat, 2-Ethoxyethylmethacrylat und lsobornylmethacrylat.

Bevorzugte nichtfunktionalisierte Acrylatcomonomere und Methacrylatcomonomer umfassen Butylacrylat, Butylmethacrylat, Methylmethacrylat, iso-Butylmethacrylat, Cyclohexylacrylat, Cyclohexylmethacrylat, Isobornylacrylat und Isobornylmethacrylat und ihre Mischungen.

Geeignete Styrolmonomere umfassen Styrol, a-Methylstyrol, Vinyltoluol, p-Methylstyrol, t-Butylstyrol, o-Chlorstyrol, Vinylpyridin sowie ihre Mischungen. Bevorzugte Styrolmonomere sind Styrol und α-Methylstyrol.

Gemäß einer erfindungsgemäßen Ausführungsform enthält das Epoxidklebharz 50 - 80 Gew.-% bezogen auf das Gesamtgewicht der Monomere, mindestens eines Epoxidgruppen tragenden (Meth)acrylatmonomers und 20 - 50 Gew.-% eines oder mehrerer Styrolmonomers in einpolymerisierter Form. Gemäß einer weiteren Ausführungsform enthält das Epoxidklebharz 25 - 50 Gew.-% mindestens eines Epoxidgruppen tragenden (Meth)acrylatmonomers, 15-30 Gew.-% mindestens eines Styrolmonomers und 20 - 60 Gew.-% mindestens eines nichtfunktionalisierten Methacrylat- und/oder Acrylatmonomers in einpolymerisierter Form. Gemäß einer weiteren bevorzugten Ausführungsform enthält das Epoxidklebharz 50 - 80 Gew.-% mindestens eine Epoxidgruppen tragenden (Meth)acrylatmonomers, 15-45 Gew.-% mindestens eines Styrolmonomers und 0-5 Gew.-% mindestens eines nichtfunktionalisierten Methacrylatmonomers und/oder Acrylatmonomers in einpolymerisierter Form. Gemäß einer weiteren bevorzugten Ausführungsform enthält das Epoxidklebharz 15 - 45 Gew.-% mindestens eine Epoxidgruppen tragenden (Meth)acrylatmonomers und 55-85 Gew.-% mindestens eines nichtfunktionalisierten Methacrylatmonomers und/oder Acrylatmonomers in einpolymerisierter Form.

Die Epoxidklebharze können durch ihre chemischen und physikalischen Eigenschaften wie ihr Molekulargewicht, ihr Epoxid-Äquivalentgewicht (EEW), ihre zahlenmittlere Epoxidfunktionalität (Efn), und ihre gewichtsmittlere Epoxidfunktionalität (Efw) charakterisieren werden. Erfindungsgemäß sind Epoxidklebharze mit niedrigen bis sehr hohen EEW-Werten geeignet. Beispielsweise sind Epoxidklebharze geeignet, die einen EEW-Werte im Bereich von 180 bis 2800, ein mittleres Molekulargewicht (Mw) von ≤25000, einen Efn-Wert von ≤ 30 und einen Efw-Wert von ≤ 140 haben.

Epoxidklebharze werden nach allgemein bekannten Herstellungsverfahren erhalten. Derartige Verfahren umfassen kontinuierliche Polymerisationsverfahren, Batch- und Semibatch-Verfahren. Für die erwähnten Epoxidklebharze geeignete Verfahren werden in den US-Patentanmeldungen Ser. No. 09/354,350 und Ser. No. 09/614,402 und der US 6,346,590 beschrieben.

Bevorzugte Epoxidacrylatharze sind unter dem Namen Joncryl^{®} ADR von BASF SE erhältlich.

Die Monomere I, II und III sind die oben genannten, insbesondere die als bevorzugt genannten.

Die Polymere der Kapselwand der Mikrokapseln mit Epoxidklebharzkern enthalten im Allgemeinen mindestens 40 Gew.-%, in bevorzugter Form mindestens 50 Gew.-%, in besonders bevorzugter Form mindestens 60 Gew.-%, sowie bis zu 90 Gew.-% eines oder bevorzugt mehrere Monomere I aus ausgewählt unter C₁-C₂₄-Alkylester der Acryl- und/oder Methacrylsäure, Acrylsäure, Methacrylsäure und/oder Maleinsäure einpolymerisiert, bezogen auf das Gesamtgewicht der Monomere.

Diese Monomere I umfassen bevorzugt 5 bis 70 Gew.-%, insbesondere bis zu 50 Gew.-%, bezogen auf die Gesamtmenge der Monomere I, wenigstens eines Monomers Ia.

Die Polymere der Kapselwand der Mikrokapseln mit Epoxidklebharzkern enthalten mindestens 10 Gew.-%, in bevorzugter Form mindestens 15 Gew.-%, in besonders bevorzugter Form mindestens 20 Gew.-%, sowie bis zu 60 Gew.-%, vorzugsweise bis zu 50 Gew.-% eines oder mehrerer bi- oder polyfunktioneller Monomere (Monomere II), welches in Wasser nicht löslich oder schwer löslich ist, einpolymerisiert, bezogen auf das Gesamtgewicht der Monomere.

Daneben können die Polymere bis zu 40 Gew.-%, vorzugsweise bis zu 30 Gew.-%, insbesondere bis zu 20 Gew.-% sonstige Monomere III einpolymerisiert enthalten. Besonders bevorzugt enthalten sie weniger als 5 Gew.-% sonstige Monomere III einpolymerisiert. Ganz besonders bevorzugt ist die Kapselwand nur aus den Monomeren I und II aufgebaut.

Bevorzugt ist die Kapselwand der Mikrokapseln mit Epoxidklebharzkern ist im Wesentlichen aufgebaut aus

| | |
|---|---|
| 40 bis 90 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 10 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |

jeweils bezogen auf das Gesamtgewicht der Monomere, wobei die Monomere I 10 bis 90 Gew.-%, bezogen auf die Gesamtmenge der Monomere I, wenigstens ein Monomer Ia umfassen, dessen Homopolymerisat eine Glasübergangstemperatur (Tg) von ≤ 60°C, bevorzugt ≤20°C, besonders bevorzugt ≤-20°C aufweist.

Die Herstellung der Mikrokapseln mit Epoxidklebharzkern erfolgt wie zuvor beschrieben durch eine so genannte in-situ-Polymerisation, insbesondere nach der bevorzugten Verfahrensweise. Es werden im Verfahren die oben genannten Hilfsmittel, wie Schutzkolloide, gegebenenfalls Tenside, Radikalstarter und gegebenenfalls Regler eingesetzt, insbesondere die jeweils als bevorzugt genannten. Entsprechend ist es möglich, wie oben beschrieben im Anschluss an die Polymerisationsreaktion die Mikrokapseldispersionen weitgehend frei von Geruchsträgern zu gestalten.

Man kann auf diese Weise Mikrokapseln mit Epoxidklebharzkern mit einer mittleren Teilchengröße im Bereich von 0,5 bis 100 µm herstellen, wobei die Teilchengröße in an sich bekannter Weise über die Scherkraft, die Rührgeschwindigkeit, das Schutzkolloid und seine Konzentration eingestellt werden kann. Bevorzugt werden Mikrokapseln mit einer mittleren Teilchengröße im Bereich von 0,5 bis 50 µm, bevorzugt 0,5 bis 30 µm (Z-Mittel mittels Lichtstreuung). Nach dem erfindungsgemäßen Verfahren können Mikrokapseldispersionen mit einem Gehalt von 5 bis 50 Gew.-% an Mikrokapseln hergestellt werden. Die Mikrokapseln sind wie bereits oben beschrieben Einzelkapseln.

Die erfindungsgemäßen Mikrokapseln enthaltend ein Epoxidklebharz eignen sich als Vernetzer für Klebstoffe, insbesondere Haftklebstoffe, Anstriche, Lacke, Papierstreichmassen oder sonstigen Beschichtungs- oder Imprägnierungsmitteln. Die erfindungsgemäßen Mikrokapseln enthaltend ein Epoxidklebharz eignen sich insbesondere für Klebstoffsysteme wie Mehrkomponentenklebstoffe. Die Epoxidgruppen vernetzen die weiteren Komponenten des Klebstoffsystems. Besonders bevorzugt werden sie in wässrigen Klebstoffsystemen eingesetzt.

Die zu vernetzenden Polymere des Haftklebstoffs enthalten vorzugsweise funktionelle Gruppen, die über eine nukleophile Öffnung des Epoxides mit diesem reagieren können sowie die erfindungsgemäßen Mikrokapseln. Bevorzugt sind primäre oder sekundäre Amingruppen, Hydroxylgruppen oder besonders bevorzugt Säuregruppen, insbesondere Carbonsäuregruppen. Die Mikrokapseln wirken z. B. als Vernetzer für wässrige Polyurethandispersionen oder wässrige Dispersionen von durch radikalische Polymerisation (vorzugsweise durch Emulsionspolymerisation) erhältlichen Polymeren, insbesondere von Acrylatdispersionen und auch deren Gemische.

Das Polymer der erfindungsgemäß für Haftklebstoffe einzusetzenden wässrigen Dispersion enthält funktionelle Gruppen, die durch nukleophile Öffnung mit dem Epoxid reagieren können, wie Carbonsäure-, Sulfonsäure- oder Phosphonsäuregruppe. Bevorzugt werden Carbonsäuregruppen. Derartige funktionelle Gruppen können durch polymeranaloge Umsetzungen eingebaut werden, bevorzugt jedoch direkt durch Copolymerisation von diese funktionellen Gruppen tragenden ethylenisch ungesättigten Verbindungen, bevorzugt Säuregruppen tragende, ethylenisch ungesättigte Verbindungen (nachfolgend auch als Säuremonomere bezeichnet). Beispielhaft seien als Säuremonomere Acrylsäure, Methacrylsäure, Itaconsäure, Maleinsäure oder Fumarsäure genannt. Die erfindungsgemäßen Haftklebstoffe umfassen im Wesentlichen eine wässrige Acrylatdispersion aus Acrylat- und Säuremonomeren und Epoxidklebharz enthaltenden Mikrokapseln.

Der Gehalt dieser Säuremonomere einpolymerisiert im Polymer beträgt vorzugsweise 0,05 bis 8 Gew. %, besonders bevorzugt 0,5 bis 7 Gew. % und ganz besonders bevorzugt 1 bis 5 Gew. %; bezogen auf das Polymer.
Die wässrigen Dispersionen, insbesondere Acrylatdispersionen, werden durch radikalische Emulsionspolymerisation von ethylenisch ungesättigten Verbindungen, insbesondere Acrylaten und Säuregruppen tragenden Comonomeren (Säuremonomeren), aufgebaut. Das Emulsionspolymerisat ist vorzugsweise zu mindestens 40 Gew.-%, bevorzugt zu mindestens 60 Gew.-%, besonders bevorzugt zu mindestens 80 Gew.-% aus sogenannten Hauptmonomeren aufgebaut.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z.B. (Meth)acrylsäurealkylester mit einem C₁-C₁₀-Alkylrest, wie Methyl-methacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, α- und p-Methylstyrol, α-Butyl-styrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt werden Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer aus weiteren Monomere aufgebaut sein, wie Hydroxylgruppen enthaltende Monomere, insbesondere C₁-C₁₀-Hydroxyalkyl(meth)acrylate und (Meth)acrylamid.

Als weitere Monomere seien darüber hinaus Phenyloxyethylglykolmono-(meth-)acrylat, Glycidylacrylat, Glycidylmethacrylat, Amino- (meth-)acrylate wie 2-Aminoethyl-(meth-) acrylat genannt.

Als weitere Monomere seien auch vernetzende Monomere genannt.

Besonders bevorzugt wird das Polymer zu mindestens 40 Gew.-%, insbesondere mindestens 60 Gew.-% und ganz besonders bevorzugt zu mindestens 80 Gew.-% aus C₁-C₂₀-, insbesondere C₁-C₁₀-Alkyl(meth)acrylaten aufgebaut.

Bei der Emulsionspolymerisation werden ethylenisch ungesättigte Verbindungen (Monomere) in Wasser polymerisiert, wobei ionische und/oder nicht -ionische Emulgatoren und/oder Schutzkolloide bzw. Stabilisatoren als grenzflächenaktive Verbindungen zur Stabilisierung der Monomertröpfchen und der später aus den Monomeren gebildeten Polymerteilchen verwendet werden.

Eine ausführliche Beschreibung geeigneter Schutzkolloide für die Herstellung der wässrigen Polymerdisperison findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als grenzflächenaktive Substanzen Emulgatoren eingesetzt, deren Molekulargewicht im Unterschied zu den Schutzkolloiden üblicherweise unter 2000 g/mol liegen. Geeignete Emulgatoren sind in der WO 2006/136574 beschrieben, auf die ausdrücklich Bezug genommen wird. Geeignete Emulgatoren zur Herstellung der wässrigen Polymerdispersion finden sich ebenfalls in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax 2 A1, Emulan NP 50, Dextrol OC 50, Emulgator 825, Emulgator 825 S, Emulan OG, Texapon NSO, Nekanil 904 S, Lumiten I-RA, Lumiten E 3065, Disponil FES 77, Lutensol AT 18, Steinapol VSL, Emulphor NPS 25.

Der Emulgator wird üblicherweise in Mengen von 0,1 bis 10 Gew.-%, bezogen auf die zu polymerisierenden Monomeren verwendet.

Bei der Emusionspolymerisation werden in der Regel wasserlösliche Initiatoren für die radikalische Polymerisation der Monomere verwendet. Geeignete Initiatoren sind wasserlösliche Initiatoren wie Ammonium- und Alkalimetallsalze der Peroxodischwefelsäure, z.B. Natriumperoxodisulfat, Wasserstoffperoxid oder organische Peroxide, z.B. tert-Butylhydroperoxid sowie so genannte Reduktions-Oxidations(Red-Ox)-Initiator Systeme.

Geeignete Initiatoren für die Emulsionspolymerisation sowie deren Mengen sind dem Fachmann bekannt und werden beispielsweise in der WO 2006/136574 beschrieben, auf die ausdrücklich Bezug genommen wird.

Darüber hinaus können der Emulsionspolymerisation Polymerisationsregler, kurz Regler, eingesetzt zugesetzt werden, um eine Kettenabbruchreaktion zu bewirken und das Molekulargewicht zu steuern. Regler, wie Mercaptoverbindungen, sind dem Fachmann allgemein bekannt und können in üblichen Mengen zugesetzt werden, wie in der WO 2006/136574 beschrieben, auf die ausdrücklich Bezug genommen wird.

Für die Durchführung der Emulsionspolymerisation gilt folgendes:

Die Emulsionspolymerisation erfolgt in der Regel bei 30 bis 130°C, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Polymerisation kann als Zulaufverfahren in Stufen- oder Gradientenfahrweise, durchgeführt werden. Bevorzugt ist ein Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z.B. zur besseren Einstellung der Teilchengröße eine Polymersaat vorgelegt werden.

Vorzugsweise werden maximal 30 Gew. % der Gesamtmenge der Monomeren, besonders bevorzugt maximal 20 Gew. %, ganz besonders bevorzugt maximal 10 Gew. % der Monomeren im Polymerisationsgefäß vorgelegt. Die übrigen Monomeren, d.h. vorzugsweise mindestens 70 Gew. %, besonders bevorzugt mindestens 80 Gew. %, ganz besonders bevorzugt mindestens 90 Gew. % werden während der Polymerisation kontinuierlich zugegeben. Die Zugabe der Monomeren zum Polymerisationsgefäß erfolgt vorzugsweise über einen Zeitraum von mindestens zwei Stunden, besonders bevorzugt mindestens drei Stunden. Die einzelnen Komponenten können dem Reaktor beim Zulaufverfahren von oben, in der Seite oder von unten durch den Reaktorboden zugegeben werden.

Die Art und Weise, in der der Initiator im Verlauf der radikalischen wässrigen Emulsionspolymerisation dem Polymerisationsgefäß zugegeben wird, ist dem Durchschnittsfachmann bekannt. Er kann sowohl vollständig im Polymerisationsgefäß vorgelegt werden, als auch nach Maßgabe seines Verbrauchs im Verlauf der radikalischen wässrigen Emulsionspolymerisation kontinuierlich oder stufenweise eingesetzt werden. Im Einzelnen hängt dies von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Der Initiator wird meist in Form einer wässrigen Lösung eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-% Initiator, bevorzugt 0,5 bis 20 Gew.-%, besonders bevorzugt 1,0 bis 10 Gew.-%, bezogen auf die Lösung.

Zur Entfernung der Restmonomeren wird üblicherweise auch nach dem Ende der eigentlichen Emulsionspolymerisation, d.h. nach einem Umsatz der Monomeren von mindestens 95 %, Initiator zugesetzt.

Es werden wässrige Acrylatdispersionen mit Feststoffgehalten von 15 bis 75 Gew.-%, bevorzugt von 40 bis 75 Gew.-% gewählt. Methoden zur Modifizierung des Feststoffgehalts sind dem Fachmann bekannt und sind auch in der WO 2006/136574 beschrieben, auf die ausdrücklich Bezug genommen wird.

Die Glasübergangstemperatur des Polymeren beträgt vorzugsweise -60 bis 0°C, besonders bevorzugt -60 bis -10°C und ganz besonders bevorzugt -60 bis -20°C.
Die Glasübergangstemperatur lässt sich nach üblichen Methoden wie Differentialthermoanalyse oder Differentail Scanning Calorimetrie (s. z.B. ASTM 3418/82, sog. "midpoint temperature") bestimmen.

Derartige erfindungsgemäß für Haftklebstoffe geeignete wässrige Acrylatdispersion sind bekannt und unter den ACRONAL^{®} Marken von BASF SE erhältlich.

Der erfindungsgemäße Haftklebstoff enthält die wässrige Acrylatdispersion und die erfindungsgemäßen Mikrokapseln mit Epoxidklebharz. Der Gehalt an Mikrokapseln beträgt vorzugsweise 0,1 bis 20 Gew.-Teile, besonders bevorzugt 0,2 bis 10 Gew.-Teile Mikrokapsel, ganz besonders bevorzugt 0,5 bis 5 Gew.-Teile Mikrokapseln bezogen auf den Feststoffgehalt der zu vernetzenden Dispersion, bevorzugt der wässrigen Acrylatdispersion.

Darüber hinaus kann der Haftklebstoff noch einen oder mehrere Zusatzstoffe enthalten ausgewählt unter Tackifier, Verdickungsmittel, vorzugsweise Assoziativverdicker, Entschäumer, Weichmacher, Pigmente, Netzmittel und Füllstoffe.

Tackifier sind klebrigmachende Harze, wie in Adhesive Age, Juli 1987, Seite 19-23 oder Polym. Mater. Sci. Eng. 61 (1989), Seite 588-592 beschrieben. Beispielhaft seien Naturharze, wie Kolophoniumharze und deren durch Disproportionierung oder Isomerisierung, Polymerisation, Dimerisation, Hydrierung entstehenden Derivate genannt. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol als Tackifier Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht Mw unter 30 000. Die Polyacrylate bestehen bevorzugt zu mindestens 60, insbesondere mindestens 80 Gew.-% aus C₁-C₈-Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wässrigen Dispersionen der Polymerisate zugesetzt werden. Vorzugsweise liegen die Tackifier dabei selber in Form einer wässrigen Dispersion vor.

Die Gewichtsmenge der Tackifier beträgt vorzugsweise 5 bis 100 Gew.-Teile, besonders bevorzugt 10 bis 50 Gew.-Teile bezogen auf 100 Gew.-Teile Polymer der Acrylatdispersion (fest/fest).

Für eine bessere Benetzung von Oberflächen können die Haftklebstoffe insbesondere Benetzungshilfsmittel, z.B. Fettalkoholethoxylate, Alkylphenolethoxylate, Sulfobernsteinsäureester, Nonylphenolethoxylate, Polyoxyethylene/-propylene oder Natriumdodecylsulfonate enthalten. Die Menge beträgt im allgemeinen 0,05 bis 5 Gew.-Teile, insbesondere 0,1 bis 3 Gew.-Teile auf 100 Gew.-Teile Polymer der Acrylatdispersion (fest).

Die Mikrokapseln werden bevorzugt als Mikrokapseldispersion mit der Polymerdispersion beispielsweise einer Polyurethandispersion oder bevorzugt einer oben beschriebenen Acrylatdispersion, oder deren Mischungen vermischt.

Die Haftklebstoffe eignen sich zur Herstellung selbstklebender Artikel wie Etiketten, Folien oder Klebebänder. Der Haftklebstoff kann durch übliche Methoden, z.B. durch Rollen, Rakeln, Streichen etc. auf Träger, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Insbesondere eignen sich auch Träger mit unpolaren Oberflächen, z.B. aus Polyolefinen, insbesondere Polyethylen oder Polypropylen, da die erfindungsgemäßen Dispersionen darauf gut haften.

Das Wasser kann bevorzugt durch Trocknung bei 50 bis 150°C entfernt werden. Die Träger können vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z.B. mit einem silikonisierten Papier, abgedeckt werden.

Die erfindungsgemäßen selbstklebenden Artikel haben sehr gute Klebeeigenschaften, insbesondere eine gute Adhäsion zu den Substraten und eine hohe Kohäsion (innere Festigkeit in der Klebstoffschicht).

Gegenstand der vorliegenden Erfindung ist daher auch ein Verfahren zur Verklebung von mindestens zwei Substraten, bei dem auf die Oberfläche mindestens eines Substrates mindestens ein erfindungsgemäßer Haftklebstoff aufgebracht wird und nach Zusammenfügen der Substrate die Klebestelle erwärmt wird.

In der Regel wird auf eine Temperatur im Bereich von 30 bis 200 °C, bevorzugt 50 bis 100°C erwärmt. Die Dauer der Erwärmung, abhängig von der Temperatur, beträgt mindestens 1 Minute. Ab diesem Zeitraum ist bereits eine Verfestigung zu beobachten. Dabei kann das Erwärmen gezielt erfolgen oder erst im Gebrauch der verklebten Gegenstände, wenn diese Temperaturschwankungen ausgesetzt sind. Der erfindungsgemäße Haftklebstoff eignet sich für Anwendungen, die immer wieder höheren Temperaturen ausgesetzt sind, wie sie beispielsweise durch Sonneneinstrahlung im Innenraum einem Auto oder durch Erwärmen eines Motor auftreten können. Es wird kein Erweichen der Klebestelle beobachtet. Vielmehr bewirkt das Auftreten von höheren Temperaturen die Verfestigung.

Die erfindungsgemäßen Klebstoffsysteme zeigen vorteilhafte anwendungstechnische Eigenschaften. Die Acrylatdispersion bewirkt, dass es zu einer Verklebung der Werkteile kommt und durch anschließendes Erwärmen zur erfindungsgemäßen Verfestigung der Klebestelle. Ferner zeigen die beschichteten Klebstoffe eine gute Wasserbeständigkeit.

### Beispiele

### Beispiel 1 (Modellsystem mit Farbstoff, um die Kapselwandöffnung mittels IR-Strahlung zu demonstrieren)

| Wasserphase | |
|---|---|
| 540,71 g | VE-Wasser (VE = vollentsalztes Wasser) |
| 35 g | einer 10 gew.-%igen wässrigen Polyvinylalkohollösung (Mowiol 15/79 der Kuraray Europe GmbH, Viskosität der 4 gew.-%igen Lösung bei 20 °C, von 15 mPas nach DIN 53015 und einem Verseifungsgrad von 79%) |
| 140 g | einer 5 gew.-%igen wässrigen Methylhydroxypropylcelluloselösung (Culminal MHPC 100, Hercules GmbH) |
| | |

| Ölphase | |
|---|---|
| 10,47g | 1,4-Butandioldiacrylat |
| 24,43g | Methylmethacrylat |
| 314,12 g | Diisopropylnaphthalin |
| 0,94 g | Pergascript Rot I 6 B (Ciba Specialty Chemicals) |
| 0,04 g | Lumogen IR 788 (BASF Aktiengesellschaft) |
| | |

| Zugabe 1 | |
|---|---|
| 2,33 g | einer 75 gew.-%igen Lösung von tert-Butylperpivalat in aliphatischen Kohlenwasserstoffen |
| | |

| Zulauf 1 | |
|---|---|
| 8,05 g | einer 10 gew.-%igen wässrigen Lösung von tert-Butylhydroperoxid |
| | |

| Zulauf 2 | |
|---|---|
| 25,46 g | einer 1,8 gew.-%igen wässrigen Lösung von Ascorbinsäure |

a) Bei Raumtemperatur wurde die obige Wasserphase vorgelegt. Nach Zugabe der Ölphase wurde mit einem schnelllaufenden Dissolverrührer bei 5000 Upm dispergiert. Nach 30 Minuten Dispergierung wurde eine stabile Emulsion erhalten.
b) Nach der Zufuhr der Zugabe 1 wurde der Reaktionsansatz folgendem Temperaturprogramm unterzogen: Aufheizen auf 60 °C in 60 Minuten, kontinuierliche Steigerung der Temperatur von 60 auf 70°C über einen Zeitraum von 120 Minuten, Erhöhen auf 85 °C innerhalb von 30 Minuten und Halten dieser Temperatur für 60 Minuten. Danach wurde der Zulauf 1 zugegeben und beim Abkühlen auf Raumtemperatur der Zulauf 2 innerhalb von 60 Minuten zugefahren.

Man erhielt eine Dispersion mit einem Festgehalt von 29,9 Gew.-% mit einer mittleren Teilchengröße von (D50) = 5,62 µm (z-Mittel bestimmt mittels Lichtstreuung).

### Beispiel 2 (ohne IR-Absorber- nicht erfindungsgemäß)

Es wurde analog Beispiel 1 vorgegangen mit dem Unterschied, dass kein IR-Absorber zugesetzt wurde.

Man erhielt eine Dispersion mit einem Festgehalt von 31 Gew.-% mit einer mittleren Teilchengröße von (D50) = 4,56 µm (z-Mittel bestimmt mittels Lichtstreuung).

### Beispiel 3 (Modellsystem mit Farbstoff, um die Kapselwandöffnung mittels IR-Strahlung zu demonstrieren)

Es wurde analog Beispiel 1 vorgegangen mit dem Unterschied, dass 0,07 g Lumogen IR 788 als IR-Absorber zugesetzt wurden.

Man erhält eine Dispersion mit einem Festgehalt von 30,2 Gew.-% mit einer mittleren Teilchengröße von (D50) = 5,03 µm (z-Mittel aus der Lichtstreuung).

### Beispiel 4

| Wasserphase | |
|---|---|
| 540,71 g | VE-Wasser |
| 35 g | einer 10 gew.-%igen wässrigen Polyvinylalkohollösung (Mowiol 15/79) |
| 140 g | einer 5 gew.-%igen wässrigen Methylhydroxypropylcelluloselösung (Culminal MHPC 100, Hercules GmbH) |

| Ölphase | |
|---|---|
| 5,23 g | 1,4-Butandioldiacrylat |
| 8,72 g | Methylmethacrylat |
| 3,49 g | Penthaerythrit-triacrylat |
| 331,3 g | Diisopropylnaphthalin |
| 0,27 g | 2-Ethylhexylthioglycolat |
| 0,99 g | Pergascript Rot I 6 B |
| 0,04 g | Lumogen IR 788 |
| | |

| Zugabe 1 | |
|---|---|
| 1,17 g | einer 75 gew.-%igen Lösung von tert-Butylperpivalat in aliphatischen Kohlenwasserstoffen |
| | |

| Zulauf 1 | |
|---|---|
| 8,05 g | einer 10 gew.-%igen wässrigen Lösung von tert-Butylhydroperoxid |
| | |

| Zulauf 2 | |
|---|---|
| 25,46 g | einer 1,8 gew.-%igen wässrigen Lösung von Ascorbinsäure |

a) Bei Raumtemperatur wurde die obige Wasserphase vorgelegt. Nach Zugabe der Ölphase wurde mit einem schnelllaufenden Dissolverrührer bei 5000 Upm dispergiert. Nach 30 Minuten Dispergierung wurde eine stabile Emulsion erhalten.
b) Nach der Zufuhr der Zugabe 1 wurde der Reaktionsansatz folgendem Temperaturprogramm unterzogen: Aufheizen auf 60 °C in 60 Minuten, kontinuierliche Steigerung der Temperatur von 60 auf 70°C über einen Zeitraum von 120 Minuten, Erhöhen auf 85 °C innerhalb von 30 Minuten und Halten der Temperatur für 60 Minuten. Danach wurde der Zulauf 1 zugegeben und beim Abkühlen auf Raumtemperatur der Zulauf 2 innerhalb von 60 Minuten zugefahren.

Man erhielt eine Dispersion mit einem Festgehalt von 32,7 Gew.-% mit einer mittleren Teilchengröße von (D50) = 4,06 µm (z-Mittel bestimmt mittels Lichtstreuung).

### Beispiel 5

### Wasserphase

540,71 g VE-Wasser

35 g einer 10 gew.-%igen wässrigen Polyvinylalkohollösung (Mowiol 15/79) 140 g einer 5 gew.-%igen wässrigen Methylhydroxypropylcelluloselösung (Culminal MHPC 100, Hercules GmbH)

| Ölphase | |
|---|---|
| 10,47g | 1,4-Butandioldiacrylat |
| 24,43g | Methylmethacrylat |
| 300,59 g | Diisopropylnaphthalin |
| 13,56 g | Lanthanborid (LaB₆; CAS 12008-21-8; Pulver, Partikelgröße < 1 µm)) |
| 0,95 g | Pergascript Rot I 6 B |
| | |

| Zugabe 1 | |
|---|---|
| 2,33 g | einer 75 gew.-%igen Lösung von tert-Butylperpivalat in aliphatischen Kohlenwasserstoffen |
| | |

| Zulauf 1 | |
|---|---|
| 8,05 g | einer 10 gew.-%igen wässrigen Lösung von tert-Butylhydroperoxid |
| | |

| Zulauf 2 | |
|---|---|
| 25,46 g | einer 1,8 gew.-%igen wässrigen Lösung von Ascorbinsäure |

Es wurde analog Beispiel 1 eine Emulsion hergestellt und polymerisiert.
Man erhielt eine Dispersion mit einem Festgehalt von 32,9 Gew.% mit einer mittleren Teilchengröße von (D50) = 6,11 µm (z-Mittel aus der Lichtstreuung).

### Beispiel 6

| Wasserphase | |
|---|---|
| 540,71 g | VE-Wasser |
| 35 g | einer 10 gew.-%igen wässrigen Polyvinylalkohollösung (Mowiol 15/79) |
| 140 g | einer 5 gew.-%igen wässrigen Methylhydroxypropylcelluloselösung (Culminal MHPC 100, Hercules GmbH) |
| | |

| Ölphase | |
|---|---|
| 10,47g | 1,4-Butandioldiacrylat |
| 24,43g | Methylmethacrylat |
| 310,56 g | Diisopropylnaphthalin |
| 3,5 g | Eisen (II, III)-oxid (Magnetpigment 346 der BASF AG, Partikelgröße < 1 µm) |
| 0,95 g | Pergascript Rot I 6 B |
| | |

| Zugabe 1 | |
|---|---|
| 2,33 g | einer 75 gew.-%igen Lösung von tert-Butylperpivalat in aliphatischen Kohlenwasserstoffen |

| Zulauf 1 | |
|---|---|
| 8,05 g | einer 10 gew.-%igen wässrigen Lösung von tert-Butylhydroperoxid |
| | |

| Zulauf 2 | |
|---|---|
| 25,46 g | einer 1,8 gew.-%igen wässrigen Lösung von Ascorbinsäure |

Es wurde analog Beispiel 1 eine Emulsion hergestellt und polymerisiert.
Man erhielt eine Dispersion mit einem Festgehalt von 28,8 Gew.-% mit einer mittleren Teilchengröße von (D50) = 6,83 µm (z-Mittel aus der Lichtstreuung).

### Anwendungsbeispiele 1 - 6

Die aus den Beispielen 1-6 erhaltenen Mikrokapseldispersionen wurden jeweils mittels einer Rakel auf eine mit Silikagel beschichtete Glasplatte aufgetragen, wobei nach dem Trocknen homogene Filme erhalten wurden. Zur Zerstörung der Kapselwand wurden diese dann mit einem Titan/Saphir-Laser (Wellenlänge: 773 nm; Leistungsdichte: 20 W/cm²) bestrahlt.
Die Freisetzung des Kapselinhaltes, die der Beweis für die Zerstörung der Kapselwand ist, wird durch die Leukobase Pergascript Rot I 6B angezeigt, die durch das saure Silikagel protoniert wird und dadurch eine rote Farbe annimmt.

Die Ergebnisse dieses Bestrahlungsversuches sind in Tabelle 1 zusammengefasst. Die Färbung der Silikagelplatte wurde visuell beurteilt
0: keine Färbung
1 : leichte Rotfärbung
2: Starke Rotfärbung.

Angegeben wird die Intensität der Färbung vor der Bestrahlung I₀ und nach n Sekunden Bestrahlung In.

**Tabelle 1**

| Probe | Färbung I₀ | Färbung Iₙ | Bestrahlungsdauer n [Sek] |
|---|---|---|---|
| Beispiel 1 | 1 | 2 | 1 |
| Beispiel 2 | 0 | 0 | 10 |
| Beispiel 3 | 0 | 2 | <1 |
| Beispiel 4 | 0 | 1-2 | 30 |
| Beispiel 5 | 0 | 2 | 1 |
| Beispiel 6 | 0 | 2 | 5 |

Die folgenden Beispiele beschreiben die Freisetzung von Klebrohstoffen.

### Beispiel 7

| Wasserphase | |
|---|---|
| 331,4 g | VE-Wasser |
| 70 g | einer 10 gew.-%igen wässrigen Polyvinylalkohollösung (Mowiol 15/79) |
| 140 g | einer 5 gew.-%igen wässrigen Methylhydroxypropylcelluloselösung (Culminal MHPC 100, Hercules GmbH) |
| 1,34 g | einer 2,5 gew.-%igen wässrigen Lösung von Natriumnitrit |
| | |

| Ölphase | |
|---|---|
| 314 g | 1-Chloro-2,3-epoxypropane-4,4'-isopropylidenebisphenol Polymer mit einer Viskosität von 500-700 mPas (bei 25°C) (Araldite 506, CAS: 25068-38-6, Sigma Aldrich Coop.) |
| 10,5 g | 1,4-Butandioldiacrylat |
| 24,5g | Methylmethacrylat |
| 0,04 g | Lumogen IR 788 |
| 0,95 g | Pergascript Rot I 6 B |
| | |

| Zugabe 1 | |
|---|---|
| 2,33 g | einer 75 gew.-%igen Lösung von tert-Butylperpivalat in aliphatischen Kohlenwasserstoffen |
| | |

| Zulauf 1 | |
|---|---|
| 3,5 g | einer 10 gew.-%igen wässrigen Lösung von tert-Butylhydroperoxid |
| | |

| Zulauf 2 | |
|---|---|
| 17,3 g | einer 1,1 gew.-%igen wässrigen Lösung von Ascorbinsäure |

a) Es wurden 314 g 1-Chloro-2,3-epoxypropane-4,4'-isopropylidenebisphenol Polymer mit einer Viskosität von 500-700 mPas (bei 25°C) (Araldite 506) in einem 2l Kessel vorgelegt, und die Bestandteile der Wasserphase sowie die Monomere und Absorber zugegeben. Diese Mischung wurde dann mit einem schnelllaufenden Dissolverrührer bei 6000 Upm dispergiert. Nach 20 Minuten Dispergierung wurde eine stabile Emulsion erhalten.
b) Nach der Zufuhr der Zugabe 1 wurde der Reaktionsansatz folgendem Temperaturprogramm unterzogen: Aufheizen auf 60 °C in 60 Minuten, kontinuierliche Steigerung der Temperatur von 60 auf 70°C über einen Zeitraum von 120 Minuten, Erhöhen auf 85 °C innerhalb von 30 Minuten und Halten der Temperatur für 60 Minuten. Danach wurde der Zulauf 1 zugegeben und beim Abkühlen auf Raumtemperatur der Zulauf 2 innerhalb von 60 Minuten zugefahren.

Man erhielt eine Dispersion mit einem Festgehalt von 36,3 Gew.-% mit einer mittleren Teilchengröße von (D50) = 2,43 µm (z-Mittel bestimmt mittels Lichtstreuung).

### Beispiel 8

| Wasserphase | |
|---|---|
| 291,9 g | VE-Wasser |
| 40 g | einer 10 gew.-%igen wässrigen Polyvinylalkohollösung (Mowiol 15/79) |
| 80 g | einer 5 gew.-%igen wässrigen Methylhydroxypropylcelluloselösung (Culminal MHPC 100, Hercules GmbH) |
| 0,76 g | einer 2,5 gew.-%igen wässrigen Lösung von Natriumnitrit |
| | |

| Ölphase | |
|---|---|
| 179,4 g | 1-Chloro-2,3-epoxypropane-4,4'-isopropylidenebisphenol Polymer mit einer Viskosität von 500-700 mPas (bei 25°C) (Araldite 506) |
| 1 g | Methacrylsäure |
| 5,85 g | Methylmethacrylat |
| 3 g | Pentaerythritoltetraacrylat |
| 0,02 g | Lumogen IR 788 |
| 0,54 g | Pergascript Rot I 6 B |
| 10 g | Hexadekan |
| 0,16 g | 2-Ethylhexylthioglykolat |
| | |

| Zugabe 1 | |
|---|---|
| 1,33 g | einer 75 gew.-%igen Lösung von tert-Butylperpivalat in aliphatischen Kohlenwasserstoffen |
| | |

| Zulauf 1 | |
|---|---|
| 2 g | einer 10 gew.-%igen wässrigen Lösung von tert-Butylhydroperoxid |
| | |

| Zulauf 2 | |
|---|---|
| 18,3 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 29 Gew.-% mit einer mittleren Teilchengröße von (D50) = 6,37 µm (z-Mittel aus der Lichtstreuung).

### Beispiel 9

| Wasserphase | |
|---|---|
| 344,19 g | VE-Wasser |
| 46 g | einer 10 gew.-%igen wässrigen Polyvinylalkohollösung (Mowiol 15/79) |
| 92 g | einer 5 gew.-%igen wässrigen Methylhydroxypropylcelluloselösung (Culminal MHPC 100, Hercules GmbH) |
| 0,88 g | einer 2,5 gew.-%igen wässrigen Lösung von Natriumnitrit |
| | |

| Ölphase | |
|---|---|
| 206,4 g | Araldite 506 |
| 13,68 g | Methylmethacrylat |
| 1,8 g | n-Butylacrylat |
| 6,9 g | Butandioldiacrylat |
| 0,02 g | Lumogen IR 788 |
| 0,62 g | Pergascript Rot I 6 B |
| | |
| | |

| Zugabe 1 | |
|---|---|
| 1,53 g | einer 75 gew.-%igen Lösung von tert-Butylperpivalat in aliphatischen Kohlenwasserstoffen |
| | |

| Zulauf 1 | |
|---|---|
| 2,3 g | einer 10 gew.-%igen wässrigen Lösung von tert-Butylhydroperoxid |
| | |

| Zulauf 2 | |
|---|---|
| 11,33 g | einer 1,1 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 30 Gew.-% mit einer mittleren Teilchengröße von (D50) = 6,27 µm (z-Mittel aus der Lichtstreuung).

### Beispiel 10

| Wasserphase | |
|---|---|
| 321,1 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 197,4 g | Araldite 506 |
| 7,7 g | Methylmethacrylat |
| 3,3 g | Butandioldiacrylat |
| 0,02 g | Lumogen IR 788 |
| 0,59 g | Pergascript Rot I 6 B |
| 11 g | Hexadekan |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,2 g | einer 10 gew.-%igen wässrigen Lösung von tert-Butylhydroperoxid |
| | |

| Zulauf 2 | |
|---|---|
| 20,12 g | einer 1,1 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 29,4 Gew.-% mit einer mittleren Teilchengröße von (D50) = 2,39 µm (z-Mittel aus der Lichtstreuung).

### Beispiel 11

| Wasserphase | |
|---|---|
| 321,1 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 186,38 g | flüssiger Acrylat-basierter Kettenverlängerer für Polyesterharze (MW 3300, Glasübergangstemperatur -41 °C (Joncryl ADR 4380, BASF SE) |
| 2,24 g | Methacrylsäure |
| 11,43 g | Methylmethacrylat |
| 6,04 g | Butandioldiacrylat |
| 1,96 g | n-Butylacrylat |
| 0,02 g | Lumogen IR 788 |
| 0,59 g | Pergascript Rot I 6 B |
| 11 g | Hexadekan |
| 0,34 g | 2-Ethylhexylthioglykolat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,2 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 29 Gew.-% mit einer mittleren Teilchengröße von (D50) = 4,58 µm (z-Mittel aus der Lichtstreuung).

### Beispiel 12

| Wasserphase | |
|---|---|
| 321,1 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 191,8 g | Joncryl ADR 4380 |
| 1,68 g | Methacrylsäure |
| 8,56 g | Methylmethacrylat |
| 1,47 g | n-Butylacrylat |
| 4,53 g | Pentaerythritoltetraacrylat |
| 0,02 g | Lumogen IR 788 |
| 0,59 g | Pergascript Rot I 6 B |
| 11 g | Hexadekan |
| 0,26 g | 2-Ethylhexylthioglykolat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,2 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 30,4 Gew.-% mit einer mittleren Teilchengröße von (D50) = 15,25 µm (z-Mittel aus der Lichtstreuung).

### Beispiel 13

| Wasserphase | |
|---|---|
| 437,9 g | VE-Wasser |
| 60 g | einer 10 gew.-%igen wässrigen Polyvinylalkohollösung (Mowiol 15/79) |
| 120 g | einer 5 gew.-%igen wässrigen Methylhydroxypropylcelluloselösung (Culminal MHPC 100, Hercules GmbH) |
| 1,15 g | einer 2,5 gew.-%igen wässrigen Lösung von Natriumnitrit |
| | |

| Ölphase | |
|---|---|
| 254,16 g | Joncryl ADR 4380 |
| 3,05 g | Methacrylsäure |
| 15,58 g | Methylmethacrylat |
| 2,67 g | n-Butylacrylat |
| 8,24 g | Butandioldiacrylat |
| 0,03 g | Lumogen IR 788 |
| 0,81 g | Pergascript Rot I 6 B |
| 15 g | Hexadekan |
| 0,47 g | 2-Ethylhexylthioglykolat |
| | |

| Zugabe 1 | |
|---|---|
| 2 g | einer 75 gew.-%igen Lösung von tert-Butylperpivalat in aliphatischen Kohlenwasserstoffen |
| | |

| Zulauf 1 | |
|---|---|
| 3 g | einer 10 gew.-%igen wässrigen Lösung von tert-Butylhydroperoxid |
| | |

| Zulauf 2 | |
|---|---|
| 27,27 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 33,4 Gew.% mit einer mittleren Teilchengröße von (D50) = 8,86 µm (z-Mittel aus der Lichtstreuung).

### Anwendungsbeispiele 7 -13 (Aktivierung durch NIR-Laser und Mikrowelle)

Die nach den Beispielen 7-13 erhaltenen Mikrokapseldispersionen wurden jeweils mittels eines Rakels auf einem Glasträger aufgetragen. Nach dem Trocknen erhielt man homogene Filme.
Zur Verbesserung der Strahlungsabsorption wurde den Mikrokapseldispersionen der Beispiele 7 bis 13 zusätzlich eine 1 bzw. 5 gew.-%ige wässrige Dispersion von Rußen (Lepton^{®} Black, der BASF SE) zugesetzt.
a) Freisetzung durch IR-Bestrahlung
Zur Zerstörung der Kapselwand wurden die Filme dann mit einem Titan/Saphir-Laser (Wellenlänge: 773 nm; Leistungsdichte: 20 W/cm²) bestrahlt. In einem Reihenversuch wurden 5 Punkte auf der Platte unterschiedlich lange bestrahlt. Anschließend wurde visuell und haptisch beurteilt, ab welcher Bestrahlungszeit der Inhaltstoff freigesetzt wurde. Der bestrahlte und freigesetzte Punkt glänzte leicht und fühlte sich ölig an. Der nachfolgenden Tabelle sind die jeweiligen Mindestbestrahlungszeiten zu entnehmen. Die Ergebnisse dieses Bestrahlungsversuches sind in Tabelle 2 zusammengefasst, wobei zur besseren Strahlungsabsorption Ruß (Lepton Black) in verschiedenen Mengen der Dispersion zugesetzt worden ist.

**Tabelle 2.: Freisetzung des Epoxiklebharzes**

| | Minimale Bestrahlungsdauer [sec] nach Zusatz von | |
|---|---|---|
| | 1 % Lepton | 5% Lepton |
| Beispiel 7 | 10 | 1 |
| Beispiel 8 | >10 | 5 |
| Beispiel 9 | >10 | 10 |
| Beispiel 10 | 10 | 1 |
| Beispiel 11 | 5-10 | 5 |
| Beispiel 12 | 5-10 | 10 |
| Beispiel 13 | 10 | 1 |

b) Freisetzung durch Mikrowellenbestrahlung
Zur Freisetzung des Inhaltes mittels Mikrowellenstrahlung wurden 10 cm² große Stücke des beschichteten Glases in einer Mikrowelle (Leistung 300 Watt, 7 l Vofumen) für 2 Minuten bestrahlt.
Zur Verbesserung der Strahlungsabsorption wurde den Mikrokapseldispersionen der Beispiele 7 bis 13 zusätzlich eine 1 bzw. 5 gew.-%ige wässrige Dispersion von Rußen (Lepton Black) zugesetzt.

Die Ergebnisse sind in Tabelle 3 zusammengefasst.

**Tabelle 3: Freisetzung des Epoxidklebharzes**

| | Ergebnis der Mikrowellenbestrahlung (Leistungsdichte: 300 W / 7 l für 2 Minuten) | | |
|---|---|---|---|
| | 0 % Lepton | 1 % Lepton | 5% Lepton |
| Beispiel 7 | ölig | ölig | ölig |
| Beispiel 8 | Keine Reaktion | Keine Reaktion | Keine Reaktion |
| Beispiel 9 | ölig | ölig | ölig |
| Beispiel 10 | ölig | ölig | leicht ölig |
| Beispiel 11 | keine Reaktion | leicht ölig | leicht ölig |
| Beispiel 12 | keine Reaktion | ölig | ölig |
| Beispiel 13 | ölig | ölig | ölig |

### Beispiele zur Mikrokapselbildung ohne Absorber

### Beispiel 14

### Wasserphase

| | |
|---|---|
| 321,13 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 192,50 g | flüssiger Acrylat-basierter Kettenverlängerer für Polyesterharze (MW 3300, Glasübergangstemperatur -41 °C (Joncryl ADR 4380, BASF SE) |
| 1,47 g | Methacrylsäure |
| 8,57 g | Methylmethacrylat |
| 4,53 g | Pentaerythrit-triacrylat |
| 11 g | Hexadecan |
| 0,26 g | 2-Ethylhexylthioglykolat |
| 1,68 g | n-Butylacrylat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,20 g | einer 10 gew.-%igen wässrigen Lösung von tert-Butylhydroperoxid |
| Zulauf 2 | |
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 33 Gew.-% mit einer mittleren Teilchengröße von (D50) = 11,26 µm (z-Mittel aus der Lichtstreuung).

### Beispiel 15

| Wasserphase | |
|---|---|
| 321,13 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 203,50 g | flüssiger Acrylat-basierter Kettenverlängerer für Polyesterharze (MW 3300, Glasübergangstemperatur -41 °C (Joncryl ADR 4380, BASF SE) |
| 1,49 g | Methacrylsäure |
| 8,70 g | Methylmethacrylat |
| 4,60 g | Pentaerythrit-triacrylat |
| 1,71 g | n-Butylacrylat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,20 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 33 Gew.-% mit einer mittleren Teilchengröße von (D50) = 16,02 µm (z-Mittel aus der Lichtstreuung).

### Beispiel 16

| Wasserphase | |
|---|---|
| 321,13 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 203,50 g | flüssiger Acrylat-basierter Kettenverlängerer für Polyesterharze (MW 3300, Glasübergangstemperatur -41 °C (Joncryl ADR 4380, BASF SE) |
| 2,07 g | Methacrylsäure |
| 12,07 g | Methylmethacrylat |
| 2,37 g | n-Butylacrylat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,20 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 32 Gew.-% mit einer mittleren Teilchengröße von (D50) = 10,6 µm (z-Mittel aus der Lichtstreuung).

### Beispiel 17

| Wasserphase | |
|---|---|
| 321,13 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 203,50 g | flüssiger Acrylat-basierter Kettenverlängerer für Polyesterharze (MW 3300, Glasübergangstemperatur -41 °C (Joncryl ADR 4380, BASF SE) |
| 1,17 g | Methacrylsäure |
| 6,80 g | Methylmethacrylat |
| 7,19 g | Pentaerythrit-triacrylat |
| 1,33 g | n-Butylacrylat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,20 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 34 Gew.-% mit einer mittleren Teilchengröße von (D50) = 12,23 µm (z-Mittel aus der Lichtstreuung).

### Beispiel 18

| Wasserphase | |
|---|---|
| 321,13 g | VE-Wasser |
| 44 g | einer 10 gew.-%igen wässrigen Polyvinylalkohollösung (Mowiol 15/79) |
| 88 g | einer 5 gew.-%igen wässrigen Methylhydroxypropylcelluloselösung (Culminal MHPC 100, Hercules GmbH) |
| 0,84 g | einer 2,5 gew.-%igen wässrigen Lösung von Natriumnitrit |
| | |

| Ölphase | |
|---|---|
| 192,50 g | hochviskoser Acrylat-basierter Kettenverlängerer für Polyesterharze (MW 6000, Glasübergangstemperatur -37 °C (Joncryl ADR 4385, BASF SE) |
| 1,47 g | Methacrylsäure |
| 8,57 g | Methylmethacrylat |
| 4,53 g | Pentaerythrit-triacrylat |
| 11,0 g | Hexadecan |
| 0,26 g | 2-Ethylhexylthioglykolat |
| 1,68 g | n-Butylacrylat |
| | |

| Zugabe 1 | |
|---|---|
| 1,47 g | einer 75 gew.-%igen Lösung von tert-Butylperpivalat in aliphatischen Kohlenwasserstoffen |
| | |

| Zulauf 1 | |
|---|---|
| 2,20 g | einer 10 gew.-%igen wässrigen Lösung von tert-Butylhydroperoxid |
| | |

| Zulauf 2 | |
|---|---|
| 20,12 g | einer 0,6 gew.-%igen wässrigen Lösung von Ascorbinsäure |

Es wurde analog Beispiel 7 eine Emulsion hergestellt und polymerisiert.
Man erhielt eine Dispersion mit einem Festgehalt von 31 Gew.-% mit einer mittleren Teilchengröße von (D50) = 4,97 µm (z-Mittel aus der Lichtstreuung).

### Formulierungsbeispiele F1 - F8

Die Acrylatdispersionen (A) ACRONAL A225, (B) ACRONAL DS 3579 und (C) ACRONAL DS 3608 wurden mit den Mikrokapseldispersionen der Beispiele 12 und 14 die in der nachfolgenden Tabelle 4 aufgeführten Formulierungen hergestellt. Zur Herstellung der Formulierung wurden 5% (fest) der Mikrokapseldispersion auf fest berechnete Acrylatdispersion vorgelegt zudosiert und gut vermischt.

**Tabelle 4: Zusammensetzung der Formulierungen der Beispiele F1 - F8**

| Formulierungsbsp. | Mikrokapseldispersion | | Acrylatdispersion | |
|---|---|---|---|---|
| | (30%ig) | | [g] | |
| | Beispiel [g] | | | |
| F1 | Bsp. 14 | 10 | ACRONAL A225 | 100 |
| F2 (Vergleichsbeispiel) | | 0 | ACRONAL A225 | 100 |
| F3 | Bsp. 14 | 9 | ACRONAL DS 3579 | 100 |
| F4 (Vergleichsbeispiel) | | 0 | ACRONAL DS 3579 | 100 |
| F5 | Bsp. 12 | 9 | ACRONAL DS 3579 | 100 |
| F6 (Vergleichsbeispiel) | | 0 | ACRONAL DS 3579 | 100 |
| F7 | Bsp. 12 | 8,7 | ACRONAL DS 3608 | 100 |
| F8 (Vergleichsbeispiel) | | 0 | ACRONAL DS 3608 | 100 |

### Laborbeschichtung:

Die zu prüfende Formulierung wurde mittels eines geeigneten Laborstreichtisches in der gewünschten Schichtdicke (75 g/m² (fest)) auf das Trägermaterial oder das Hilfsträgermaterial aufgezogen und 3 Minuten bei 90° C im Umlufttrockenschrank getrocknet.
Nach dem Trocknungsvorgang wurde die Kleberseite des beschichteten Trägermaterials auf das endgültige Trägermaterial übertragen und dann mit Trennpapier abgedeckt. Aus der fertigen Beschichtung wurden mit Hilfe der Schneideschablone die benötigten Prüfstreifen in Beschichtungsrichtung ausgeschnitten und mindestens 16 Stunden bei Normklima (23° C, 50% relative Luftfeuchte) gelagert.

### SHEAR Adhesive Failure Test (SAFT)

Das Trennpapier wurde vom Prüfstreifen abgezogen und der Prüfstreifen mit Hilfe einer gummibeschichteten Kaschierrolle blasenfrei von Hand ohne zusätzlichen Druck auf das Prüfsubstrat aufgelegt. Die verklebte Fläche betrug 25 mm x 25mm. Anschließend wurde der Prüfstreifen mit einem Anpressdruck von 20 N/mm2, zweimal hin und her angerollt. Nach Ablauf 16 Stunden Kontaktzeit wurde der Prüfstreifen senkrecht in die Prüfvorrichtung des SAFT-Test Trockenschrankes gehängt und das Prüfgewicht von 1 kg am überstehenden Ende des Prüfstreifens befestigt. Die Temperatur im Inneren der Kammer wurde dann kontinuierliche mit 0,5°C / Min aufgeheizt. Der SAFT-Wert gibt die Temperatur an, bei der der Prüfstreifen abreißt.

**Tabelle 5: Anwendungstechnische Ergebnisse der Formulierungsbeispiele F1 bis F8**

| Formulierungsbsp. | SAFT-Wert (°C) |
|---|---|
| F1 | >180 |
| F2 | 118 |
| F3 | >180 |
| F4 | 135 |
| F5 | >180 |
| F6 | 135 |
| F7 | >180 |
| F8 | 115 |

### Beispiel 19

### Herstellung einer erfindungsgemäß geeigneten Acrylatdispersion

In einem 2-Liter-Polymerisationsreaktor mit Ankerrührer und Heiz-/Kühleinrichtung wurde ein Gemisch aus 144 g entionisiertem Wasser und 9,09 g eines 33 gew.-%igen wässrigen Polymerlatex (hergestellt durch radikalisch initiierte Emulsionspolymerisation von Styrol) mit einem gewichtsmittleren Teilchendurchmesser D_{w50} von 30 nm unter Stickstoffatmosphäre auf 85°C erhitzt.

Zulauf 1 war eine wässrige Emulsion hergestellt aus

| | |
|---|---|
| 367g | entionisiertem Wasser |
| 18,75 g | einer 30 gew.-%igen wässrigen Lösung von Disponil FES 77 (ethoxyliertes C₁₂-C₁₄ Na-sulfat) |
| 5,17 g | einer 58 gew.-%igen wässrigen Lösung von Lumiten I-SC (Bemsteinsäureester) |
| 477 g | n-Butylacrylat |
| 120 g | Methylmethacrylat. |
| 6g | Acrylsäure |

Zulauf 2: 64,3 g einer 7 gew.-%igen wässrigen Lösung von Natriumperoxodisulfat

Zulauf 3: 8,3 g einer 10 gew.-%ige wässrige Lösung von t-Butylhydroperoxid

Zulauf 4: 10,2 g einer 12 gew.-%ige wässrige Lösung von Acetonbisulfit

Nach 2 min wurden Zulauf 1 und Zulauf 2 gestartet und gleichmäßig über 3 h zudosiert. Nach Beendigung der Zugabe der Zuläufe 1 und 2 wurde 30 Minuten gerührt. Danach wurde Zulauf 3 und Zulauf 4 gestartet und gleichmäßig über einen Zeitraum von 60 Minuten zudosiert. Nach Ende der Zuläufe 3 und 4 wurde die Reaktorinnentemperatur auf 25°C abgesenkt. Die Dispersion wird mit Ammoniaklösung auf pH-Wert 7,5 gestellt. Die erhaltene wässrige Polymerdispersion wies einen Feststoffgehalt von 50 Gew.-% auf. Die mittlere Teilchengröße betrug 200 nm.

Die erhaltene Haftklebstoff-Acrylatdispersion lässt sich analog zu den obigen Formulierungsbeispielen mit den Mikrokapseldispersionen der Beispiele 12 und 14 zu vorteilhaften Haftklebstoffdispersionen formulieren.

## Patentansprüche

1. Mikrokapseln umfassend einen Kapselkern, enthaltend mindestens eine lipophile Substanz sowie mindestens eine Verbindung, die elektromagnetische Strahlung aus dem Wellenlängenbereich von 700 nm bis 1 m absorbiert und eine Kapselwand aufgebaut aus
| | |
|---|---|
| 40 bis 80 Gew.-% | eines oder mehrerer Monomere (Monomere I) ausgewählt unter C₁-C₂₄-Alkylestern der Acryl- und/oder Methacrylsäure, Acrylsäure, Methacrylsäure und Maleinsäure, |
| 20 bis 60 Gew.-% | eines oder mehrerer bi- oder polyfunktioneller Monomere (Monomere II), welches in Wasser nicht löslich oder schwer löslich ist und |
| 0 bis 40 Gew.-% | eines oder mehrerer sonstiger Monomere (Monomere III), |
jeweils bezogen auf das Gesamtgewicht der Monomere,
**dadurch gekennzeichnet, dass** die mindestens eine lipophile Substanz ausgewählt wird aus der Gruppe umfassend Vernetzer für Zweikomponentenklebstoffe, Klebharze für Zweikomponentenklebstoffe, klebrig machende Harze, Riech- und Aromastoffe, Wirkstoffe, Farbstoffe und/oder Farbbildnern, deren Absorptionsmaximum bei einer Wellenlänge < 700 nm liegt, jeweils gegebenenfalls als Lösung in lipophilen Substanzen ausgewählt unter aliphatischen und aromatischen Kohlenwasserstoffverbindungen, gesättigten oder ungesättigten C₆-C₃₀₋Fettsäuren, Fettalkoholen, C₆-C₃₀-Fettaminen, Fettsäureestern, natürlichen und synthetischen Wachsen, halogenierten Kohlenwasserstoffen und natürlichen Ölen.

2. Verfahren zur Herstellung von Mikrokapseln gemäß Anspruch 1, indem man einer Öl-in-Wasser-Emulsion, in der die Monomere, ein Radikalstarter, ein Schutzkolloid und die lipophile Substanz als disperse Phase vorliegen, erwärmt.

3. Mikrokapseln nach Anspruch 1 in Form einer wässrigen Dispersion oder eines Pulvers.

4. Verwendung von Mikrokapseln gemäß Anspruch 1 mit Klebharzen oder klebrigmachenden Harzen für Zweikomponentenklebstoffe oder Vernetzern für Zweikomponentenklebstoffe als lipophile Substanz in Klebstoffsystemen.

5. Beschichtungen enthaltend Mikrokapseln gemäß Anspruch 1.

6. Verfahren zur Freisetzung von lipophiler Substanz durch Bestrahlung von Mikrokapseln gemäß Anspruch 1 mit elektromagnetischer Strahlung ausgewählt aus dem Wellenlängenbereich von 700 nm bis 1 m.

7. Verfahren zur Verklebung von mindestens zwei Substraten, bei dem auf die Oberfläche mindestens eines Substrates mindestens ein Vernetzer und mindestens ein Klebharz und/oder ein klebrigmachendes Harz aufgebracht werden, von denen mindestens eines in Form von Mikrokapseln gemäß Anspruch 1 vorliegt, vor, während oder nach einem Zusammenfügen der Substrate mit Strahlung im Wellenlängenbereich der Absorption des Absorbers bestrahlt wird, wobei im Fall der Bestrahlung nach dem Zusammenfügen der Substrate mindestens eines der Substrate für die Strahlung zumindest teilweise durchlässig sein muss.

8. Verwendung von Mikrokapseln gemäß Anspruch 1 mit Katalysatoren und/oder Inhibitoren als lipophile Substanz in der chemischen Synthese oder in der Polymerisation.

9. Mikrokapseln, umfassend einen Kapselkern, enthaltend mindestens ein Epoxidklebharz, und eine Kapselwand aufgebaut aus
40 bis 90 Gew.-% eines oder mehrerer Monomere (Monomere I) ausgewählt unter C₁-C₂₄-Akylestern der Acryl- und/oder Methacrylsäure, Acrylsäure, Methacrylsäure und Maleinsäure,
10 bis 60 Gew.-% eines oder mehrerer bi- oder polyfunktioneller Monomere (Monomere II), welches in Wasser nicht löslich oder schwer löslich ist und
0 bis 40 Gew.-% eines oder mehrerer sonstiger Monomere (Monomere III), jeweils bezogen auf das Gesamtgewicht der Monomere.

10. Mikrokapseln nach Anspruch 9, **dadurch gekennzeichnet, dass** das Epoxidklebharz ein Epoxidacrylatharz ist.

11. Haftklebstoffe enthaltend Mikrokapseln nach Anspruch 9 oder 10.

12. Haftklebstoffe umfassend im Wesentlichen eine wässrige Acrylatdispersion aufgebaut aus Acrylat- und Säuremonomeren und Mikrokapseln nach Anspruch 9 oder 10.

13. Haftklebstoffe nach Anspruch 12, **dadurch gekennzeichnet, dass** das Polymer der wässrigen Acrylatdispersion 0,05 bis 8 Gew. % bezogen auf das Polymer Säuremonomere einpolymerisiert enthält.

14. Verwendung der Haftklebstoffe gemäss einem der Ansprüche 11 bis 13 zur Herstellung von selbstklebenden Artikeln.

15. Verfahren zur Verklebung von mindestens zwei Substraten, bei dem auf die Oberfläche mindestens eines Substrates mindestens ein Haftklebstoff gemäß einem der Ansprüche 11 bis 13 aufgebracht wird und nach Zusammenfügen der Substrate die Klebestelle erwärmt wird.

## Claims

1. Microcapsules comprising a capsule core comprising at least one lipophilic substance and also at least one compound which absorbs electromagnetic radiation from the wavelength range from 700 nm to 1 m, and a capsule wall synthesized from
| | |
|---|---|
| 40 to 80% by weight | of one or more monomers (monomers I) selected from C₁-C₂₄ alkyl esters of acrylic and/or methacrylic acid, acrylic acid, methacrylic acid, and maleic acid, |
| 20 to 60% by weight | of one or more di- or polyfunctional monomers (monomers II) which are sparingly soluble or insoluble in water, and |
| 0 to 40% by weight | of one or more other monomers (monomers III), |
based in each case on the total weight of the monomers, wherein the at least one lipophilic substance is selected from the group comprising crosslinkers for two-component adhesives, tackifier resins for two-component adhesives, tackifying resins, fragrances and flavors, actives, dyes and/or color formers whose absorption maximum lies at a wavelength < 700 nm, in each case optionally as a solution in lipophilic substances selected from aliphatic and aromatic hydrocarbon compounds, saturated or unsaturated C₆-C₃₀ fatty acids, fatty alcohols, C₆-C₃₀ fatty amines, fatty acid esters, natural and synthetic waxes, halogenated hydrocarbons and natural oils.

2. A process for preparing microcapsules according to claim 1, by heating an oil-in-water emulsion comprising the monomers, a free-radical initiator, a protective colloid and the lipophilic substance as a disperse phase.

3. The microcapsules according to claim 1 in the form of an aqueous dispersion or a powder.

4. The use of microcapsules according to claim 1 with tackifier resins or tackifying resins for two-component adhesives or crosslinkers for two-component adhesives as a lipophilic substance in adhesive systems.

5. A coating comprising microcapsules according to claim 1.

6. A method of releasing a lipophilic substance by irradiation of microcapsules according to claim 1 with electromagnetic radiation selected from the wavelength range from 700 nm to 1 m.

7. A method of adhesively bonding at least two substrates which comprises
applying to the surface of at least one substrate at least one crosslinker and at least one adhesive resin and/or a tackifying resin, of which at least one is in the form of microcapsules according to claim 1, and subjecting the substrates, before, during or after their joining, to irradiation with radiation in the wavelength range of the absorption of the absorber; in the case of irradiation after the joining of the substrates, at least one of the substrates must be at least partly transparent to the radiation.

8. The use of microcapsules according to claim 1 with catalysts and/or inhibitors as a lipophilic substance in chemical synthesis or in polymerization.

9. Microcapsules comprising a capsule core, comprising at least one epoxy tackifier resin, and a capsule wall composed of
| | |
|---|---|
| 40% to 90% by weight | of one or more monomers (monomers I) selected from C₁-C₂₄ alkyl esters of acrylic and/or methacrylic acid, acrylic acid, methacrylic acid, and maleic acid, |
| 10% to 60% by weight | of one or more difunctional or polyfunctional monomers (monomers II) which are insoluble or sparingly soluble in water, and |
| 0% to 40% by weight | of one or more other monomers (monomers III), |
based in each case on the total weight of the monomers.

10. The microcapsules according to claim 9, wherein the epoxy tackifier resin is an epoxide acrylate resin.

11. A pressure-sensitive adhesive comprising microcapsules according to claim 9 or 10.

12. A pressure-sensitive adhesive comprising essentially an aqueous acrylate dispersion composed of acrylate monomers and acid monomers and microcapsules according to claim 9 or 10.

13. A pressure-sensitive adhesive according to claim 12, wherein the polymer of the aqueous acrylate dispersion comprises in copolymerized form 0.05% to 8% by weight, based on the polymer, of acid monomers.

14. The use of a pressure-sensitive adhesive according to any of claims 11 to 13 for producing self-adhesive articles.

15. A method of adhesively bonding at least two substrates which comprises applying to the surface of at least one substrate at least one pressure-sensitive adhesive according to any of claims 11 to 13 and subjecting the bond site to heating after the substrates have been joined.

## Revendications

1. Microcapsules comprenant un noyau de capsule, contenant au moins une substance lipophile ainsi qu'au moins un composé qui absorbe le rayonnement électromagnétique de la plage de longueurs d'ondes de 700 nm à 1 m et qui présente une paroi de capsule constituée par
| | |
|---|---|
| 40 à 80 % | en poids d'un ou de plusieurs monomères (monomères I) choisis parmi les esters C₁-C₂₄-alkyliques de l'acide acrylique et/ou méthacrylique, l'acide acrylique, l'acide méthacrylique et l'acide maléique, |
| 20 à 60 % | en poids d'un ou de plusieurs monomères (monomères II) difonctionnels ou polyfonctionnels, qui ne sont pas solubles ou qui sont peu solubles dans l'eau et |
| 0 à 40% | en poids d'un ou de plusieurs autres monomères (monomères III), |
à chaque fois par rapport au poids total des monomères, **caractérisées en ce que** ladite au moins une substance lipophile est choisie dans le groupe comprenant les réticulants pour adhésifs à deux composants, les résines adhésives pour adhésifs à deux composants, les résines qui rendent adhésif, les substances odoriférantes et les arômes, les substances actives, les colorants et/ou les agents chromogènes, dont le maximum d'absorption se situe à une longueur d'onde < 700 nm, à chaque fois le cas échéant sous forme de solution dans des substances lipophiles choisies parmi les composés hydrocarbonés aliphatiques et aromatiques, les acides gras en C₆-C₃₀ saturés ou insaturés, les alcools gras, les amines grasses en C₆-C₃₀, les esters d'acides gras, les cires naturelles et synthétiques, les hydrocarbures halogénés et les huiles naturelles.

2. Procédé pour la préparation de microcapsules selon la revendication 1, en ce qu'on chauffe une émulsion huile-dans-eau, dans laquelle les monomères, un initiateur radicalaire, un colloïde de protection et la substance lipophile se trouvent sous forme de phase dispersée.

3. Microcapsules selon la revendication 1, sous forme d'une dispersion aqueuse ou sous forme d'une poudre.

4. Utilisation de microcapsules selon la revendication 1 avec des résines adhésives ou des résines qui rendent adhésif pour adhésifs à deux composants ou des réticulants pour adhésifs à deux composants comme substance lipophile dans des systèmes adhésifs.

5. Revêtements contenant des microcapsules selon la revendication 1.

6. Procédé pour la libération d'une substance lipophile par irradiation de microcapsules selon la revendication 1 par un rayonnement électromagnétique choisi dans la plage de longueurs d'ondes de 700 nm à 1 m.

7. Procédé pour coller au moins deux substrats, dans lequel on applique sur la surface d'au moins un substrat au moins un réticulant et au moins une résine adhésive et/ou une résine rendant adhésif, dont au moins l'un se trouve sous forme de microcapsules selon la revendication 1, on irradie avant, pendant ou après la réunion des substrats par un rayonnement dans la plage de longueurs d'ondes de l'absorption de l'absorbant, où dans le cas de l'irradiation après la réunion des substrats, au moins un des substrats doit être au moins partiellement perméable au rayonnement.

8. Utilisation de microcapsules selon la revendication 1 avec des catalyseurs et/ou des inhibiteurs comme substance lipophile dans la synthèse chimique ou dans la polymérisation.

9. Microcapsules, comprenant un noyau de capsule, contenant au moins une résine adhésive époxyde, et une paroi de capsule constituée par
40 à 90 % en poids d'un ou de plusieurs monomères (monomères I) choisis parmi les esters C₁-C₂₄-alkyliques de l'acide acrylique et/ou méthacrylique, l'acide acrylique, l'acide méthacrylique et l'acide maléique,
10 à 60% en poids d'un ou de plusieurs monomères (monomères II) difonctionnels ou polyfonctionnels, qui ne sont pas solubles ou qui sont peu solubles dans l'eau et
0 à 40% en poids d'un ou de plusieurs autres
monomères (monomères III),
à chaque fois par rapport au poids total des monomères.

10. Microcapsules selon la revendication 9, **caractérisées en ce que** la résine adhésive époxyde est une résine époxyde-acrylate.

11. Autoadhésifs contenant des microcapsules selon la revendication 9 ou 10.

12. Autoadhésifs comprenant essentiellement une dispersion aqueuse d'acrylate constituée par des monomères d'acrylate et d'acide et des microcapsules selon la revendication 9 ou 10.

13. Autoadhésifs selon la revendication 12, **caractérisés en ce que** le polymère de la dispersion aqueuse d'acrylate contient 0,05 à 8% en poids, par rapport au polymère, de monomères acides sous forme copolymérisée.

14. Utilisation des autoadhésifs selon l'une quelconque des revendications 11 à 13 pour la fabrication d'objets autoadhésifs.

15. Procédé pour coller au moins deux substrats, dans lequel on applique sur la surface d'au moins un substrat au moins un autoadhésif selon l'une quelconque des revendications 11 à 13 et on chauffe le site de collage après la réunion des substrats.
